# EUROPEAN PATENT APPLICATION

(11) **EP 3 792 847 A1**
(43) Date of publication of application: **17.03.2021**
(21) Application number: 19815961.8
(22) Date of filing: 07.06.2019
(51) Int. Cl.: G06Q 10/04, G06Q 10/08

(54) **DEMAND PREDICTION DEVICE AND DEMAND PREDICTION METHOD**

(30) Priority: 07.06.2018 JP 2018109251
(71) Applicant: Panasonic Intellectual Property Management Co., Ltd., Osaka-shi, Osaka 540-6207 (JP)
(72) Inventor: YAMAGUCHI Koichiro, Osaka-shi, Osaka 540-6207 (JP); OKIMOTO Yoshiyuki, Osaka-shi, Osaka 540-6207 (JP)
(74) Representative: Eisenführ Speiser
(86) International application number: PCT/JP2019/022814
(87) International publication number: WO 2019/235631

(57) **Abstract**

In a demand prediction device (5), an input unit (50) acquires an input variable that includes a delivery date and that is inputted from a user. A heat map prediction unit (17) predicts a prediction heat map (php) corresponding to the input variable by using a heat map learning model (md2) for predicting a heat map which indicates, for each segment, the number of delivery destinations distributed to a plurality of segments constituting a delivery target area. A second truck number prediction unit (20) predicts the minimum number of trucks corresponding to the prediction heat map (php) by using a minimum truck number learning model (md3) for predicting the minimum number of trucks for delivering loads to the delivery destinations. A truck number determination unit (21) determines the predicted minimum number of trucks as the number of trucks to be used on the delivery date included in the input variable.

## Description

### TECHNICAL FIELD

The present disclosure relates to a demand prediction device and a demand prediction method for predicting the number of delivery vehicles.

### BACKGROUND ART

In Patent Literature 1, a delivery planning device is disclosed in which a fuel record value for a predetermined period at a demand facility is derived based on the amount of fuel in an inventory at the demand facility, where there is a demand for fuel, and a record delivery amount of fuel that is actually delivered, a demand prediction value of the fuel is derived based on the fuel record value and a prediction model, and an inventory prediction value of the fuel is derived based on the amount of fuel in the inventory, the amount of scheduled fuel for delivery, and the demand prediction value. This delivery planning device outputs a solution of the number of delivery vehicles by solving an optimization problem that minimizes an objective function with the number of delivery vehicles as one of the variables, using the amount of fuel in the inventory, the demand prediction value, and the inventory prediction value.

### CITATION LIST

### PATENT LITERATURE

Patent Literature 1: JP-B-6205310

### SUMMARY OF INVENTION

### TECHNICAL PROBLEM

This disclosure is devised in view of the above-mentioned conventional status, and the purpose of the disclosure is to provide a demand prediction device and a demand prediction method that predict the number of delivery vehicles required for home delivery such as private homes and support the realization of an efficient delivery plan.

### SOLUTION TO PROBLEM

The present disclosure provides a demand prediction device including: an input variable acquisition unit that acquires an input variable including delivery date and time; a heat map prediction unit that predicts a heat map corresponding to the input variable by using a heat map prediction model for predicting a heat map which indicates, for each segment, the number of distributions of delivery destinations distributed in at least one of a plurality of segments constituting a delivery target area; a minimum delivery vehicle number prediction unit that predicts the minimum number of delivery vehicles corresponding to the predicted heat map by using a minimum delivery vehicle number prediction model for predicting the minimum number of the delivery vehicles for delivering a package to the delivery destination; and a delivery vehicle number determination unit that determines the predicted minimum number of the delivery vehicles as the number of delivery vehicles to be used at the delivery date and time included in the input variable.

Further, the present disclosure provides a demand prediction method in a demand prediction device, the method including: a step of acquiring an input variable including delivery date and time; a step of predicting a heat map corresponding to the input variable by using a heat map prediction model for predicting a heat map which indicates, for each segment, the number of distributions of delivery destinations distributed in at least one of a plurality of segments constituting a delivery target area; a step of predicting the minimum number of delivery vehicles corresponding to the predicted heat map by using a minimum delivery vehicle number prediction model for predicting the minimum number of the delivery vehicles for delivering a package to the delivery destination; and a step of determining the predicted minimum number of the delivery vehicles as the number of delivery vehicles to be used at the delivery date and time included in the input variable.

### ADVANTAGEOUS EFFECTS OF INVENTION

According to the present disclosure, since the number of delivery vehicles required for home delivery such as private homes can be predicted, it is possible to support the realization of an efficient delivery plan.

### BRIEF DESCRIPTION OF DRAWINGS

FIG. 1 is a block diagram illustrating in detail a hardware configuration example of a demand prediction device according to Embodiment 1.
FIG. 2 is a diagram explaining an example of an outline of an operation of the demand prediction device.
FIG. 3 is a flowchart illustrating an example of an operation procedure of learning a package quantity based on external information and a delivery record in the past.
FIG. 4 is a flowchart illustrating an example of an operation procedure for predicting the number of delivery vehicles used to deliver the predicted package quantity based on a future input variable and a package quantity learning model.
FIG. 5 is a flowchart illustrating an example of an operation procedure of learning a heat map prediction engine for predicting a heat map.
FIG. 6 is a flowchart illustrating an example of an operation procedure of learning the minimum truck number prediction engine for predicting the minimum number of trucks based on the heat map.
FIG. 7 is a flowchart illustrating an example of an operation procedure for predicting the minimum number of trucks based on the future input variable, the heat map learning model, and the minimum truck number learning model.
FIG. 8 is a flowchart illustrating an example of an operation procedure for determining the minimum number of trucks.
FIG. 9 is an explanatory diagram illustrating an example of a delivery record of the past delivered by one truck.
FIG. 10 is an explanatory diagram illustrating an example of a heat map and a matrix thereof generated based on the delivery record of the past illustrated in FIG. 9.
FIG. 11 is an explanatory diagram illustrating an example of a prediction heat map output from the heat map learning model using the future input variable.
FIG. 12 is an explanatory diagram illustrating an example of a delivery record of the past delivered by two trucks due to a large package quantity.
FIG. 13 is an explanatory diagram illustrating an example of a delivery record of the past delivered by two trucks due to a long distance from a sales office.
FIG. 14 is an explanatory diagram illustrating an example of a heat map and a matrix thereof generated during learning based on the delivery record of the past illustrated in FIG. 13.
FIG. 15 is an explanatory diagram illustrating an example of a prediction heat map output from the heat map learning model using the future input variable.
FIG. 16 is an explanatory diagram illustrating an example of a delivery record of the past delivered by two trucks due to a large number of houses.
FIG. 17 is an explanatory diagram illustrating an example of a heat map and a matrix thereof generated during learning based on the delivery record of the past illustrated in FIG. 16.
FIG. 18 is an explanatory diagram illustrating an example of a prediction heat map output from the heat map learning model using the future input variable.
FIG. 19 is a block diagram illustrating a hardware configuration example of a demand prediction system according to Embodiment 2.
FIG. 20 is a block diagram illustrating a configuration example of a package sorting system according to Embodiment 2.
FIG. 21 is a block diagram illustrating a configuration example of a projection supporting device according to Embodiment 2.
FIG. 22A is a conceptual diagram illustrating an operation example of the package sorting system.
FIG. 22B is a diagram illustrating an example of projection with respect to a package.
FIG. 23 is a flowchart illustrating an example of an operation procedure of the projection instruction device according to Embodiment 2.
FIG. 24 is a block diagram illustrating a configuration example of an inventory management system according to Embodiment 2.
FIG. 25 is a schematic front view of a display rack in which a rack label is attached.
FIG. 26 is a front view of the display rack illustrated in FIG. 25.
FIG. 27 is a diagram illustrating an example of rack allocation information.
FIG. 28 is a diagram illustrating a configuration example of a computer.
FIG. 29 is a flowchart illustrating an example of an operation procedure of the inventory monitoring device according to Embodiment 2.
FIG. 30 is a diagram illustrating an example of detecting the rack label on the display rack.
FIG. 31 is a diagram illustrating an example of setting a monitoring area.

### DESCRIPTION OF EMBODIMENTS

### (Background Leading to Obtain One Embodiment of the Present Disclosure)

In recent years, the amount of home delivery for home delivery services has increased with the spread of online shopping or the like but no matter how much the amount of home delivery is, there is a rule that packages should be delivered within a set time. Therefore, it is necessary to secure the number of delivery vehicles (for example, small trucks for delivery) and the number of drivers commensurate with the delivery time and the amount of home delivery.

However, in many sales offices, the number of trucks and the number of drivers are not abundant at present, so it is often necessary to secure the trucks and drivers in advance. If a large number of trucks are prepared to secure the delivery of packages, the cost will increase. On the other hand, if a small number of trucks are prepared in order to keep costs down, the number of trucks may be insufficient and delivery may not be in time.

In the above-mentioned Patent Literature 1, the delivery destination in which the fuel is delivered by the vehicle is a predetermined individual demand facility, and the demand for fuel can be predicted from the amount of fuel consumption of each demand facility. In other words, the demand prediction value of fuel can be regarded as the delivery amount of fuel. When the configuration of Patent Literature 1 is applied to a use case in which the delivery destinations are individual private homes that are different each time, for example, such as home delivery, the following problem arises. Specifically, since the number of orders for each delivery destination (in other words, private home) is small, such as home delivery, and sufficient learning data (in other words, delivery record) for predicting the demand for orders at each delivery destination, it becomes difficult to predict the demand for orders at individual delivery destinations. Therefore, even when the configuration of Patent Literature 1 is used, there is a problem that it is difficult to predict (in other words, to solve the optimum solution for the number of delivery vehicles) the number of delivery vehicles that deliver packages and the like to a plurality of delivery destinations.

Therefore, in the following embodiment, an example of a demand prediction device that predicts the number of delivery vehicles that deliver packages and supports the realization of an efficient delivery plan will be described regardless of the number of delivery destinations and package quantity.

### (Embodiment 1)

Hereinafter, an embodiment in which a demand prediction device and a demand prediction method according to the present disclosure are specifically disclosed will be described in detail with reference to the drawings as appropriate. However, a more detailed explanation than necessary may be omitted. For example, detailed explanations of already well-known matters and duplicate explanations for substantially the same configuration may be omitted. This is to avoid unnecessary redundancy of the following description and to facilitate the understanding of those skilled in the art. It should be noted that the accompanying drawings and the following description are provided for those skilled in the art to fully understand the present disclosure, and are not intended to limit the subject matter described in the claims.

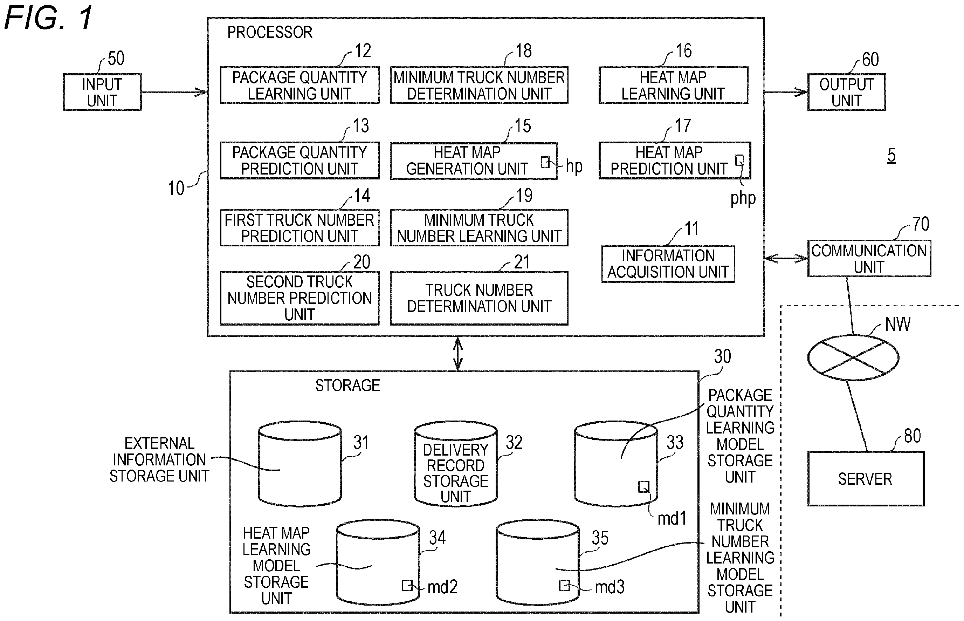

FIG. 1 is a block diagram illustrating in detail an example of an internal configuration of the demand prediction device 5 according to Embodiment 1. The demand prediction device 5 is configured to include a processor 10, a memory (not illustrated), a storage 30, an input unit 50, an output unit 60, and a communication unit 70.

The processor 10 is configured by using, for example, a CPU (Central Processing Unit), an MPU (Micro Processing Unit), a DSP (Digital Signal Processor), or an FPGA (Field-Programmable Gate Array).

The processor 10 has a functional configuration including an information acquisition unit 11, a package quantity learning unit 12, a package quantity prediction unit 13, and a first truck number prediction unit 14. Further, the processor 10 has a functional configuration including a heat map generation unit 15, a heat map learning unit 16, and a heat map prediction unit 17. Further, the processor 10 has a functional configuration including a minimum truck number determination unit 18, a minimum truck number learning unit 19, a second truck number prediction unit 20, and a truck number determination unit 21. Each part of these functional configurations is realized by the processor 10 reading a program and data corresponding to each part from a memory (not illustrated) and executing the program. Details of each part of these functional configurations will be described later.

The memory (not illustrated) is configured by using, for example, a RAM (Random Access Memory) and a ROM (Read Only Memory), temporarily stores a program and data necessary for executing an operation of the demand prediction device 5, and further stores data or information generated during the operation. The RAM is, for example, a work memory used when the processor 10 operates. The ROM stores, for example, a program and data for controlling the processor 10 in advance.

The storage 30 is configured by using, for example, a flash memory, an HDD (Hard Disk Drive), or an SSD (Solid State Drive). The storage 30 has an external information storage unit 31, a delivery record storage unit 32, a package quantity learning model storage unit 33, a heat map learning model storage unit 34, and a minimum truck number learning model storage unit 35.

The external information storage unit 31 stores external information of the past such as the weather, year, month, date, time, day of the week, and event obtained when the delivery was performed within a delivery target area in the past in association with each other. The event information includes an event date and time, contents, and the like. The event information includes, for example, information on a commodity campaign, an athletic meet or concert held in the vicinity of the delivery destination, road construction, and the like. The presence or absence of these events affects the increase in the package quantity, the change in delivery routes, or the like. The commodity campaign information may be commodity price information. For example, during the campaign period, the commodities are cheaper, which will affect the increase or decrease in the package quantity. For example, it is conceivable that the package quantity decreases more than usual immediately before the campaign period, the package quantity increases more than usual during the campaign period, and the package quantity decreases immediately after the campaign period. Further, the package quantity changes depending on whether the price is half the normal price or 30% off the normal price.

The information on the delivery record within the delivery target area of the past is stored in the delivery record storage unit 32. The delivery record information of the past includes information such as addresses of individual delivery destinations where the packages were delivered in the past, the package quantity, and the delivery route. Regarding the external information of the past that is stored in the external information storage unit 31 and the delivery record of the past that is stored in the delivery record storage unit 32, the external information and the delivery record, which are related to the same delivery, are separated and stored. Note that regarding the external information of the past that is stored in the external information storage unit 31 and the delivery record of the past that is stored in the delivery record storage unit 32, the external information and the delivery record may be related to different deliveries in the past respectively, rather than the same deliveries.

Note that the external information storage unit 31 and the delivery record storage unit 32 may be integrally configured as the delivery record storage unit 32. In this case, the delivery record storage unit 32 may only store the external information obtained when the delivery was performed in the past (for example, the weather, year, month, date, time, day of the week, event, or the like) and the delivery record information obtained when the delivery was performed in the past (for example, the individual addresses of the delivery destinations, package quantity, delivery route, or the like) in association with each other.

The package quantity learning model storage unit 33 stores the package quantity learning model md1 generated by the learning process (for example, a machine learning process) of the package quantity learning unit 12.

The heat map learning model storage unit 34 stores the heat map learning model md2 generated by the learning process (for example, the machine learning process) of the heat map learning unit 16.

The minimum truck number learning model storage unit 35 stores the minimum truck number learning model md3 generated by the learning process (for example, the machine learning process) of the minimum truck number learning unit 19.

The input unit 50 is configured by using an input device such as a keyboard or a mouse that accepts an input operation of a user of the demand prediction device 5, and inputs a future input variable (in other words, from now on or future to be predicted) set by the user via the input device. The future input variable is information such as year, month, date, time, day of the week, weather forecast, and an event.

The output unit 60 has a display device such as a liquid crystal display device (LCD: Liquid Crystal Display) or an organic EL (Electroluminescence) and outputs the predicted number of trucks (an example of a delivery vehicle) and a delivery plan using a plurality of trucks.

The communication unit 70 is communicably connected to a server 80 via a network NW.

The server 80 provides at least one of various information such as weather information and event information, for example, according to the request of the demand prediction device 5.

The information acquisition unit 11 acquires the external information of the past stored in the external information storage unit 31. The external information includes information such as the weather, year, month, date, time, day of the week, and event obtained when the delivery was performed in the past. The information acquisition unit 11 acquires the package quantity included in the delivery record information of the past stored in the delivery record storage unit 32. The information acquisition unit 11 acquires an address of the delivery destination and the delivery route included in the delivery record information of the past stored in the delivery record storage unit 32.

Further, the information acquisition unit 11 acquires the future input variable (for example, year, month, date, time, day of the week, weather, event name) input by an operation using the input unit 50 of the user. Note that the information acquisition unit 11 may acquire the future input variable such as the weather from the server based on the information of the input unit 50.

The package quantity learning unit 12 is configured with, for example, a program using AI (Artificial Intelligent), and generates the package quantity learning model md1 by the learning process (for example, the machine learning process) of the package quantity prediction engine using a plurality of sets of the package quantity of the delivery record of the past acquired by the information acquisition unit 11 and the external information at the time of package delivery. The package quantity learning model md1 is an example of a program for calculating and outputting the predicted package quantity under the condition of the input external information.

The package quantity prediction unit 13 predicts the package quantity to be delivered within the delivery target area corresponding to the future input variable (in other words, under the condition of the future input variable) by using the future input variable acquired by the information acquisition unit 11 and the package quantity learning model md1 stored in the package quantity learning model storage unit 33.

By dividing the package quantity predicted by the package quantity prediction unit 13 by the load capacity of one truck (in other words, the loadable capacity), the first truck number prediction unit 14 calculates (predicts) the number of trucks required for delivering the packages of the package quantity predicted by the package quantity prediction unit 13. In Embodiment 1, it is assumed that the load capacity of one or more trucks used for delivering each of the packages is the same. In fact, in many delivery sales offices (in other words, it is a sales office that serves as the base for delivering packages and is abbreviated as "sales office" below), vehicles of the same model are used for the package delivery in many cases. The load capacity of the plurality of trucks is not necessarily the same and may be slightly different. In that case, when dividing the predicted package quantity, an average value of the load capacity of the plurality of trucks may be used as the denominator.

For each delivery record of the past stored in the delivery record storage unit 32, based on the addresses of the plurality of delivery destinations and the address of the sales office that are acquired by the information acquisition unit 11, the heat map generation unit 15 generates a heat map hp corresponding to the delivery records of the past. Note that the address of the sales office may be included in the delivery record of the past, or may be registered in advance in the memory (not illustrated). The heat map is, for example, a heat map that divides the delivery target area that is controlled by the sales office into m ^{∗} n segments (m, n: integers greater than or equal to 1, but it does not become (m, n) = (1, 1)) and displays the number of houses of the delivery destinations distributed in each segment, or a heat map represented as a quantitative map showing the number of houses and the package quantity. Details of specific examples of the heat map will be described later.

The heat map learning unit 16 is configured with, for example, a program using AI, performs the learning process (for example, the machine learning process) of the heat map prediction engine that defines a relationship between the heat map hp and the external information by using a plurality of heat maps hp generated by the heat map generation unit 15 based on the delivery record corresponding to the external information of the past, and generates the heat map learning model md2. The heat map learning model md2 is an example of a program for calculating and outputting the predicted heat map hp under the condition of the input external information.

The heat map prediction unit 17 predicts the heat map showing the number of distributions of the package quantity delivered for each segment that constitutes the delivery target area corresponding to the future input variable (in other words, under the condition of the future input variable) by using the future input variable acquired by the information acquisition unit 11 and the heat map learning model md2 stored in the heat map learning model storage unit 34. The heat map predicted by the heat map prediction unit 17 is referred to as a "prediction heat map php" for convenience, and distinguished from the "heat map hp" generated by the heat map learning unit 16 based on the record of the past during the learning.

Based on the delivery record of the past stored in the delivery record storage unit 32, the minimum truck number determination unit 18 determines the theoretical minimum number of trucks required for delivery of the package quantity included in the delivery record thereof. The determination of the minimum number of trucks is an existing known technique, and a detailed description thereof will be omitted. For example, the minimum number of trucks may be determined to have the lowest delivery cost. The delivery cost is a parameter that can be reduced by replacing, exchanging, or transferring the package of the delivery destination, depending on the status of the delivery route, for example, when packages are delivered by a plurality of trucks. The replacing represents that the order of the delivery destinations is replaced. The exchanging represents that the delivery destinations among a plurality of delivery routes are exchanged. The transferring represents that the delivery destination is transferred to another delivery route.

Further, the minimum number of trucks may be determined to satisfy the delivery condition (for example, delivery to a delivery frame (in the morning or the like) specified in advance by a customer). Further, the minimum number of trucks may be determined by the rules of the sales office or the like. For example, with respect to the total package quantity to be delivered, it may be determined for each sales office based on a moving distance of the truck, the number of houses of the delivery destinations, the load capacity of the truck, or the like.

The minimum truck number learning unit 19 is configured with, for example, a program using AI, performs the learning process (for example, the machine learning process) of the minimum truck number prediction engine that defines a relationship between the minimum number of trucks and the heat map hp by using a plurality of sets of the minimum number of trucks based on the delivery record of the past determined by the minimum truck number determination unit 18 and the heat map hp based on the delivery record of the past generated by the heat map generation unit 15, and generate the minimum truck number learning model md3. The minimum truck number learning model md3 is an example of a program for calculating and outputting the minimum number of trucks used under the condition of the input prediction heat map php.

The second truck number prediction unit 20 predicts the minimum number of trucks required for delivering the package to one or more delivery destinations distributed in the segment of the prediction heat map php by using the minimum truck number learning model md3 stored in the minimum truck number learning model storage unit 35 and the prediction heat map php predicted by the heat map prediction unit 17.

The truck number determination unit 21 compares a predicted value of the minimum number of trucks predicted by the first truck number prediction unit 14 with a predicted value of the minimum number of trucks predicted by the second truck number prediction unit 20. Based on this comparison, the truck number determination unit 21 determines the larger predicted value (in other words, the number of delivery trucks is large) to the predicted value of the number of trucks as the number of trucks to be used corresponding to the future input variable input from the input unit 50. This is because when the predicted value with the smaller predicted value (in other words, the number of delivery trucks is small) is used as the number of trucks to be used corresponding to the future input variable, there is a high possibility that the delivery requirement (complete all deliveries in time) will not be satisfied.

Note that when the sales office may take the risk of not meeting the above delivery requirement and it is a policy to deliver with the minimum number of trucks or the like, the predicted value of the smaller number of trucks may be determined as the number of trucks to be used corresponding to the future input variable.

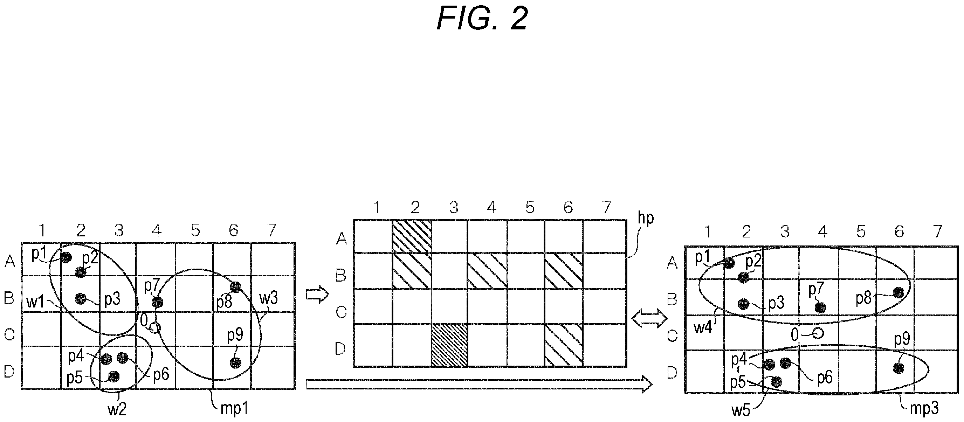

Next, an example of an outline of the operation of the demand prediction device 5 according to Embodiment 1 described above will be described with reference to FIG. 2.

With reference to FIG. 2, an example of the outline of the operation of the demand prediction when the package is delivered by truck from the sales office is illustrated. FIG. 2 is a diagram illustrating an example of the outline of the operation of the demand prediction device 5.

In FIG. 2, the map mp1 illustrates the delivery target area which is under the control of the sales office and is divided into a plurality of segments represented by, for example, 4 rows ^{∗} 7 columns (corresponding to the above-mentioned example of m = 4 and n = 7). ^{∗} (asterisk) indicates a multiplication operator, and the same applies below.

The heat map generation unit 15 reads, for example, one of the delivery records of the past from the delivery record storage unit 32, and allocates the information of the respective addresses of the sales office o and the delivery destinations p1, p2, p3, p4, p5, p6, p7, p8, and p9, which are included in the delivery record information, so as to be distributed in the corresponding segment of the map mp1. Each segment can be represented, for example, mathematically by the matrix elements. Further, in the map mp1, each of the delivery destinations delivered by one truck is surrounded by round frames w1, w2, and w3, based on the delivery record of the past. The frame w1 surrounds two houses of delivery destinations p1 and p2 distributed (located) in the segment of row A and column 2 and one house of delivery destination p3 distributed (located) in the segment of row B and column 2. Similarly, the frame w2 surrounds three houses of delivery destinations p4, p5, and p6 distributed (located) in the segment of row D and column 3. The frame w3 surrounds one house of delivery destination p7 distributed (located) in the segment of row B and column 4, one house of delivery destination p8 distributed (located) in the segment of row B and column 6, and one house of delivery destination p9 distributed (located) in the segment of row D and column 6.

The heat map generation unit 15 plots (allocates) delivery destinations to each segment as in the map mp1 based on the delivery record of the past, and then generates a heat map hp in the center of the paper surface. The heat map hp quantitatively shows the number of distributions of delivery destinations (house) distributed for each segment in the segment. In FIG. 2, as an example, each segment of row B and column 2, row B and column 4, row B and column 6, and row D and column 6 in which one house is distributed is drawn in yellow (coarse hatch lines in the drawing). The segment of row A and column 2 in which two houses are distributed is drawn in orange (hatch lines finer than the coarse hatch lines that indicate yellow in the drawing). The segment of row D and column 3 in which three houses are distributed is drawn in deep red (hatch lines further finer than the hatch lines that indicate orange in the drawing).

The map mp3 is generated when the minimum truck number determination unit 18 determines the minimum number of trucks and indicates a delivery target area similar to the map mp1. Note that in the map mp3, for the sake of simplicity of explanation, the same delivery destinations p1 to p9 as the delivery destinations p1 to p9 distributed (located) in the segment of the map mp1 are distributed (located) in the same segment. In the map mp3, frames w4 and w5 that surround the delivery destinations, where each truck is delivered, are shown with respect to the delivery destinations p1 to p9 distributed (located) in the segment of the map mp1 based on the number of trucks determined using the minimum truck number determination unit 18. The frame w4 surrounds the delivery destinations p1 to p3, p7, and p8. The frame w5 surrounds the delivery destinations p4 to p6 and p9.

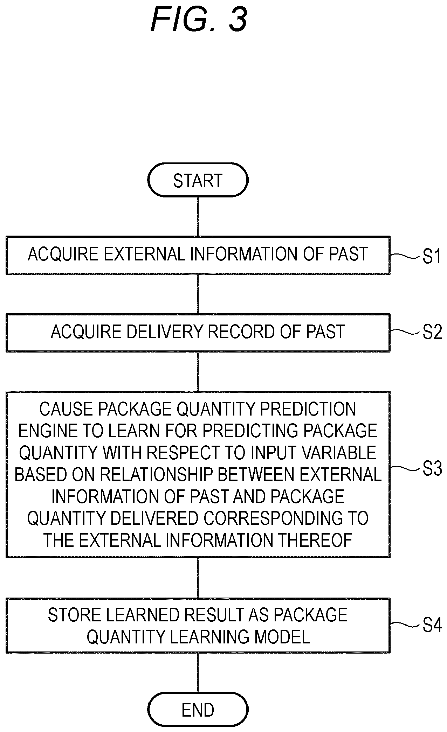

Next, each of the operation procedures performed by the demand prediction device 5 according to Embodiment 1 will be described with reference to FIGS. 3 to 8. In each of the flowcharts in FIGS. 3 to 8, each process is executed by the processor PRC1 (see FIG. 1) of the demand prediction device 5.

FIG. 3 is a flowchart illustrating an example of an operation procedure of learning a package quantity based on external information and delivery records in the past. In FIG. 3, the information acquisition unit 11 acquires the external information of the past stored in the external information storage unit 31 (S1). Further, the information acquisition unit 11 acquires the delivery record of the past stored in the delivery record storage unit 32 (S2).

The package quantity learning unit 12 causes the package quantity prediction engine to learn for predicting the package quantity with respect to the input variable (for example, the year, month, date, time, day of the week, weather forecast, event name, or the like) based on the relationship between the external information of the past acquired in step S1 and the delivery record (for example, the package quantity delivered) acquired in step S2 corresponding to the external information thereof (S3). As described above, in the learning in step S3, the machine learning process by the package quantity learning unit 12 is executed. The package quantity learning unit 12 generates the package quantity learning model md1 as a result of the learning process in step S3, and stores the package quantity learning model md1 in the package quantity learning model storage unit 33 (S4). After that, a series of processes that is defined by the operation procedure in FIG. 3 by the processor 10 is ended.

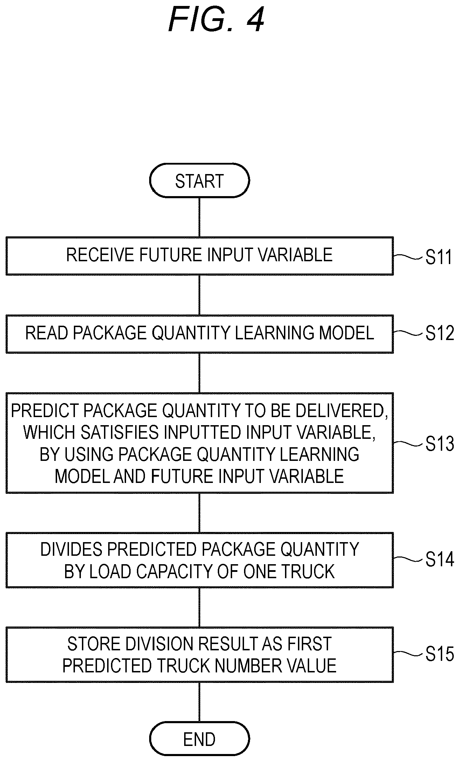

FIG. 4 is a flowchart illustrating an example of an operation procedure for predicting the number of delivery vehicles used to deliver the predicted package quantity based on a future input variable and a package quantity learning model. In FIG. 4, the input unit 50 receives and acquires the future input variable input by the user's operation (S11). The future input variable includes the year, month, date, time, day of the week, weather forecast, event name, or the like, which may affect the delivery of packages by truck. The package quantity prediction unit 13 reads the package quantity learning model md1 stored in the package quantity learning model storage unit 33 (S12).

The package quantity prediction unit 13 predicts the package quantity to be delivered, which satisfies the input variable that is input from the input unit (in other words, under the condition of the future input variable), by using the package quantity learning model md1 read in step S12 and the future input variable input in step S11 (S13).

The first truck number prediction unit 14 divides the package quantity predicted in step S13 by the load capacity of one truck (in other words, the loadable capacity) (S14). As a result of the division, the first truck number prediction unit 14 temporarily stores the first predicted truck number value corresponding to the division result in the memory (not illustrated) in the processor 10 as the predicted value of the number of trucks (S15). After that, a series of processes that is defined by the operation procedure in FIG. 4 by the processor 10 is ended.

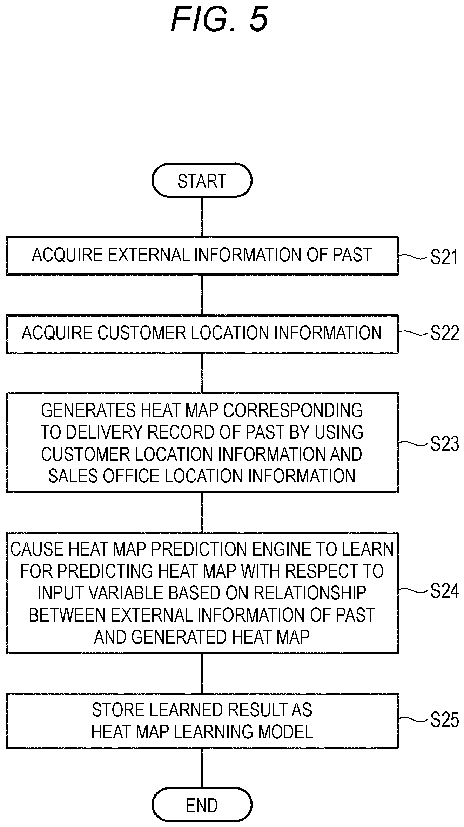

FIG. 5 is a flowchart illustrating an example of an operation procedure of learning a heat map prediction engine for predicting a heat map hp. In FIG. 5, the information acquisition unit 11 acquires the external information of the past stored in the external information storage unit 31 (S21). Further, the information acquisition unit 11 acquires location information of the customer (for example, the address or the information on the place of residence of the customer) which is the delivery destination at that time from the delivery record information of the past stored in the delivery record storage unit 32 (S22). Further, the information acquisition unit 11 acquires location information of the sales office (for example, the information on the place of residence of the sales office) from the memory (not illustrated).

The heat map generation unit 15 generates a heat map hp (see FIG. 2) corresponding to the delivery record of the past by using the respective location information of the customer and the sales office acquired in step S22 (S23). The heat map hp corresponding to the delivery record of the past is an index that quantitatively shows how many delivery destinations (one or more) included in the delivery record information of the past are distributed in which of a plurality of segments (small areas) constituting the delivery target area.

The heat map learning unit 16 causes the heat map prediction engine to learn for predicting the heat map with respect to the input variable (for example, the year, month, date, time, day of the week, weather forecast, event name, or the like) based on the relationship between the external information of the past acquired in step S21 and the heat map hp generated in step S23 (S24). As described above, in the learning in step S24, the machine learning process by the heat map learning unit 16 is executed. The heat map learning unit 16 generates the heat map learning model md2 as a result of the learning process in step S24, and stores the heat map learning model md2 in the heat map learning model storage unit 34 (S25). After that, a series of processes that is defined by the operation procedure in FIG. 5 by the processor 10 is ended.

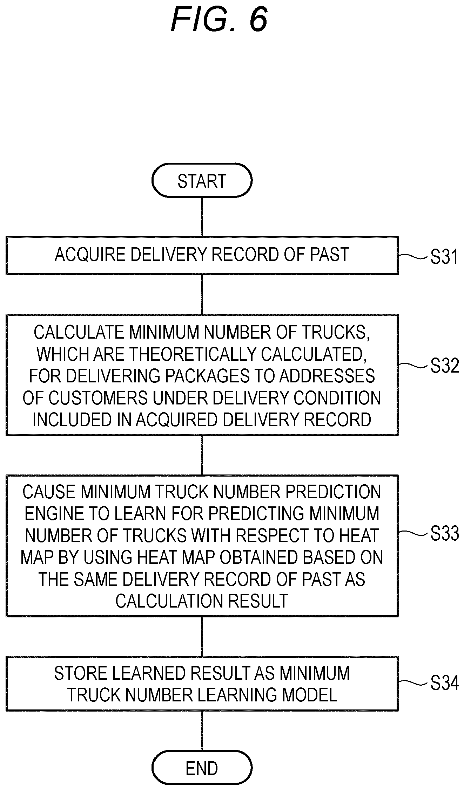

FIG. 6 is a flowchart illustrating an example of an operation procedure of learning the minimum truck number prediction engine for predicting the minimum number of trucks based on the heat map. In FIG. 6, the information acquisition unit 11 acquires the delivery record of the past stored in the delivery record storage unit 32 (S31). The minimum truck number determination unit 18 calculates the theoretical minimum number of trucks for delivering packages to the addresses or place of residence of the customers under the delivery condition (see below) included in the delivery record information acquired in step S31, and determines the minimum number of trucks obtained as a calculation result (S32).

Here, the delivery condition is, for example, to deliver the package to either a delivery frame in the morning (10:00 to 12:00), a delivery frame from 12:00 to 14:00, a delivery frame from 14:00 to 16:00, a delivery frame from 16:00 to 18:00, or a delivery frame from 18:00 to 20:00. Further, the delivery condition may include, for example, the use of a plurality of trucks when a distance between the address or the place of residence of the customer which is the delivery destination and the address or the place of residence of another customer is greater than or equal to a certain value. Further, the delivery conditions may include, for example, the maximum number of customers that can be delivered by one truck within the time zone of the above-mentioned delivery frame.

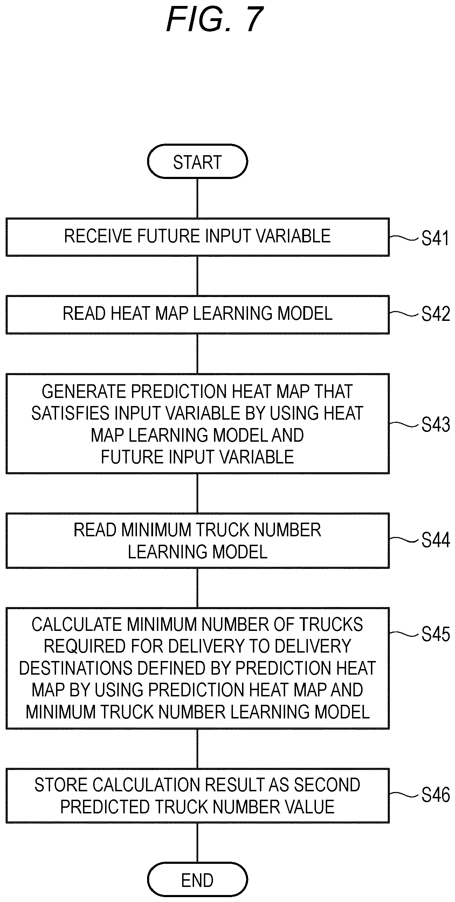

The minimum truck number learning unit 19 causes the minimum truck number prediction engine to learn for predicting the minimum number of trucks with respect to the heat map hp obtained based on the relationship between the calculation result of the minimum number of trucks based on the delivery record of the past acquired in step S31 and the heat map hp obtained based on the same delivery record of the past (S33). As described above, in the learning in step S33, the machine learning process by the minimum truck number learning unit 19 is executed. The minimum truck number learning unit 19 generates the minimum truck number learning model md3 as a result of the learning process in step S33, and stores the minimum truck number learning model md3 in the minimum truck number learning model storage unit 35 (S34). After that, a series of processes that is defined by the operation procedure in FIG. 7 by the processor 10 is ended.

FIG. 7 is a flowchart illustrating an example of an operation procedure for predicting the minimum number of trucks based on the future input variable, the heat map learning model, and the minimum truck number learning model. In FIG. 7, the input unit 50 receives and acquires the future input variable input by the user's operation (S41). The heat map prediction unit 17 reads the heat map learning model md2 stored in the heat map learning model storage unit 34 (S42). The heat map prediction unit 17 generates a prediction heat map php that satisfies the input variable by using the heat map learning model md2 read in step S42 and the future input variable acquired in step S41 (S43).

The second truck number prediction unit 20 reads the minimum truck number learning model md3 stored in the minimum truck number learning model storage unit 35 (S44). The second truck number prediction unit 20 predicts and calculates the minimum number of trucks required for delivery to one or more delivery destinations defined (in other words, it is predicted to be distributed corresponding to the input variable acquired in step S41) by the prediction heat map php (S45) by using the prediction heat map php read in step S44 and the minimum truck number learning model md3 (S45). The second truck number prediction unit 20 temporarily stores the calculation result of step S45 as a second predicted truck number value in a memory (not illustrated) in the processor 10 (S46). After that, a series of processes that is defined by the operation procedure in FIG. 7 by the processor 10 is ended.

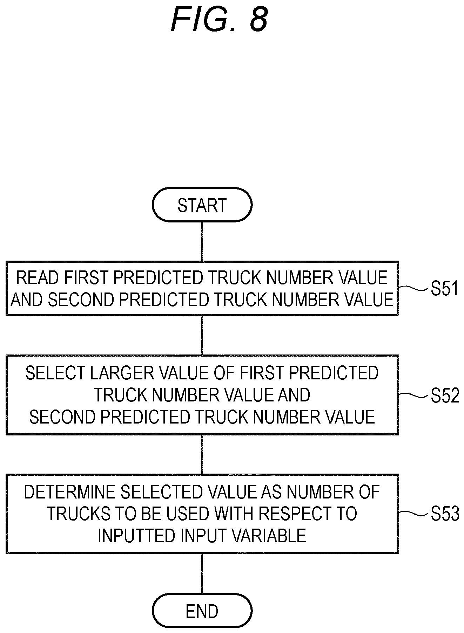

FIG. 8 is a flowchart illustrating an example of an operation procedure for determining the minimum number of trucks. In FIG. 8, the truck number determination unit 21 reads the first predicted truck number value and the second predicted truck number value temporarily which are stored in the memory (not illustrated) of the processor 10 (S51). The truck number determination unit 21 selects the larger value of the first predicted truck number value and the second predicted truck number value which are read in step S51 (S52). The truck number determination unit 21 determines the predicted truck number value selected in step S52 as the number of trucks to be used with respect to the future input variable input from the input unit 50 by the user's operation (S53). After that, a series of processes that is defined by the operation procedure in FIG. 8 by the processor 10 is ended.

Next, a specific example of the operation of acquiring the prediction heat map php, which is input to the minimum truck number learning model md3 together with the future input variable and used for predicting the minimum number of trucks, using the heat map learning model md2 will be described.

### (Example of Delivering by One Truck)

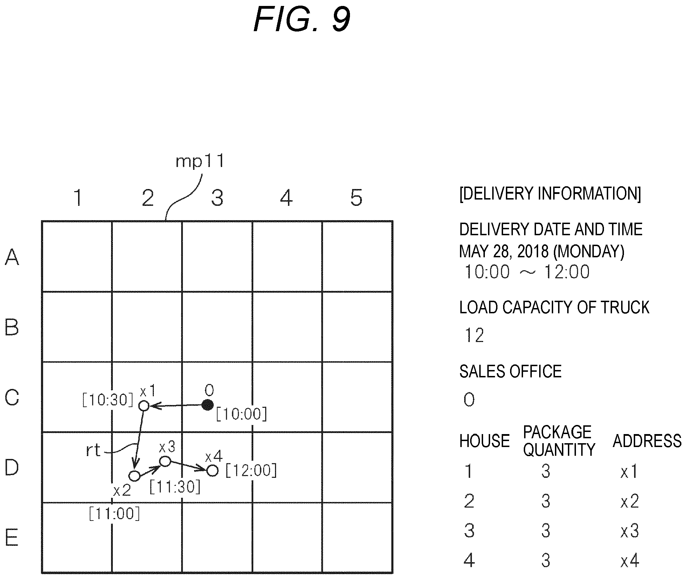

FIG. 9 is an explanatory diagram illustrating an example of a delivery record of the past delivered by one truck. The map mp11 illustrates the delivery target area which is under the control of the sales office and is divided into a plurality of segments represented by, for example, 5 rows ^{∗} 5 columns (corresponding to the above-mentioned example of m = n = 5). Here, for convenience, each row of the map mp11 is represented by A to E, each column is represented by 1 to 5, and each segment is represented by matrix elements A1 to E5.

The delivery record of the past (an example of delivery information) includes the delivery date and time: May 28, 2018 (Monday) 10: 00 to 12: 00, load capacity of truck: 12, sales office address: o, and delivery destination information. The delivery destination information includes delivery destination: first house, package quantity: 3, address: x1, delivery destination: second house, package quantity: 3, address: x2, delivery destination: third house, package quantity: 3, address: x3, delivery destination: fourth house, package quantity: 3, address: x4.

The sales office o, the delivery destination address x1 to x4, the delivery time [10:00] to [12:00], and the delivery route rt are drawn on the map mp11. Here, it is illustrated that one truck departed from the sales office o at 10:00, performed the delivery of the first house at 10:30, performed the delivery of the second house at 11:00, performed the delivery of the third house at 11:30, and performed the delivery of the fourth house at 12:00.

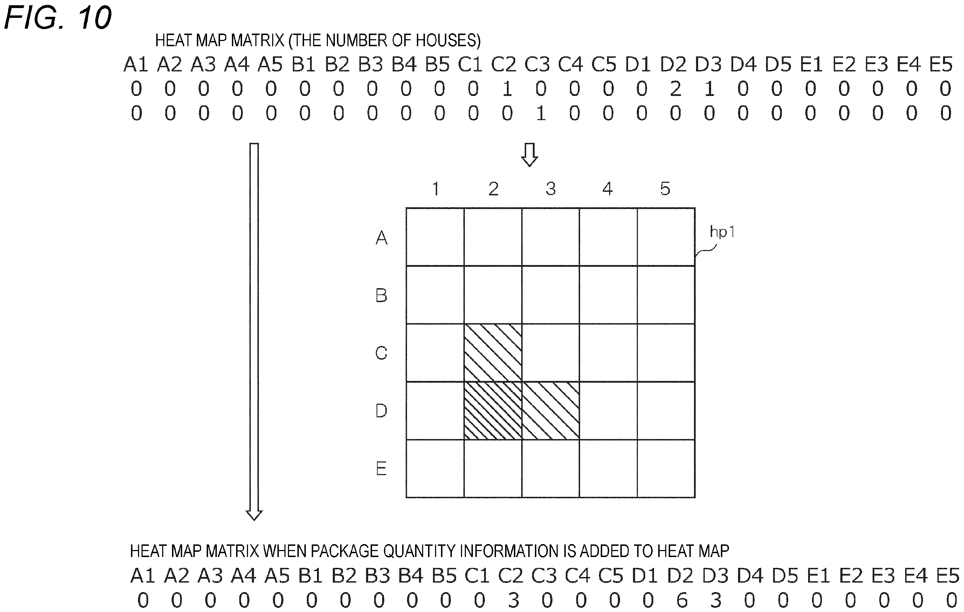

FIG. 10 is an explanatory diagram illustrating an example of a heat map hp1 and a matrix thereof generated based on the delivery record of the past illustrated in FIG. 9. This heat map hp1 is generated by the heat map generation unit 15 as an example and is input at the time of learning (see step S24 in FIG. 5). In the heat map hp1, each segment of row C and column 2, and row D and column 3 is drawn in yellow (coarse hatch lines in the drawing). The segment of row D and column 2 is drawn in orange (hatch lines finer than the coarse hatch lines that indicate yellow in the drawing).

Here, when the heat map hp1 is represented by a matrix indicating the number of houses since there is one house as a delivery destination in the segment represented by the matrix element C2, the value 1 is registered in the matrix element C2. Similarly, since there are two houses as delivery destinations in the segment represented by the matrix element D2, the value 2 is registered in the matrix element D2. Since there is one house as a delivery destination in the segment represented by the matrix element D3, the value 1 is registered in the matrix element D3. Further, since there is the sales office o in the segment represented by the matrix element C3, the value 1 is registered in the matrix element C3.

Further, when the heat map hp1 is represented by a matrix indicating the number of houses and the package quantity since there are three packages in the segment represented by the matrix element C2, the value 3 is registered in the matrix element C2. Similarly, since there are six packages in the segment represented by the matrix element D2, value 6 is registered in the matrix element D2. Since there are three packages in the segment represented by the matrix element D3, the value 3 is registered in the matrix element D3. Since there is no package quantity in the other matrices, the value 0 is registered in the other elements. As a result, by using the heat map hp1 with a matrix in which not only the number of houses but also the package quantity is added for learning, the package quantity can be added to the prediction of the number of trucks.

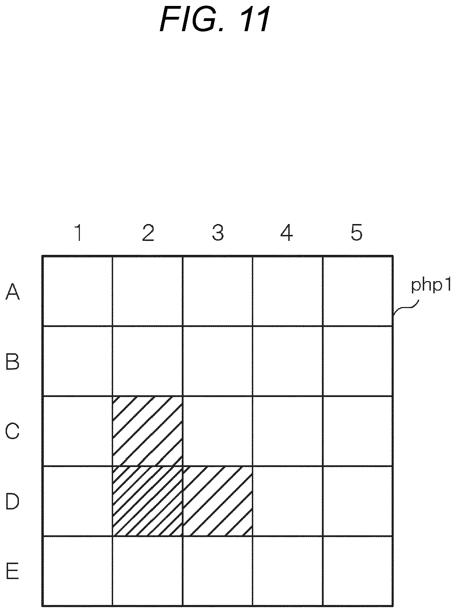

FIG. 11 is a diagram illustrating an example of the prediction heat map php1 output from the heat map learning model md2 using the future input variable. Here, as an example of the prediction heat map php, the prediction heat map php1 is generated in the same distribution as the heat map hp1 generated based on the delivery record of the past illustrated in FIG. 10 but may be generated in a different distribution. The prediction heat map php1 is generated based on the delivery record of the past illustrated in FIG. 10 and quantitatively shows that one house in the segment corresponding to the matrix element C2 of the heat map illustrated in FIG. 10, two houses in the segment corresponding to the matrix element D2 of the same heat map, and one house in the segment corresponding to the matrix element D3 of the same heat map, as delivery destinations are respectively distributed.

### (Example of Delivering by Two Trucks Depending on the Package Quantity)

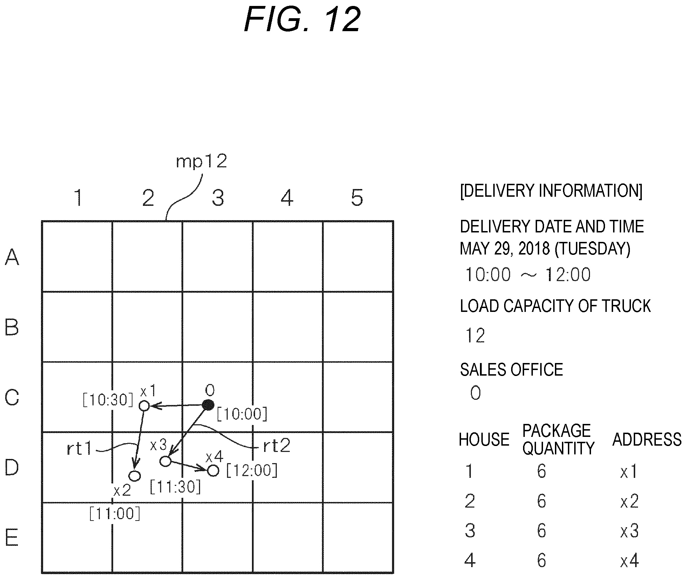

FIG. 12 is a diagram illustrating an example of a delivery record of the past delivered by two trucks due to a large package quantity. Similar to the map mp11, the map mp12 illustrates the delivery target area which is under the control of the sales office and is divided into a plurality of segments represented by, for example, 5 rows ^{∗} 5 columns (corresponding to the above-mentioned example of m = n = 5).

The delivery record of the past (an example of delivery information) includes the delivery date and time: May 29, 2018 (Tuesday) 10: 00 to 12: 00, load capacity of truck: 12, sales office address: o, and delivery destination information. The delivery destination information includes delivery destination: first house, package quantity: 6, address: x1, delivery destination: second house, package quantity: 6, address: x2, delivery destination: third house, package quantity: 6, address: x3, delivery destination: fourth house, package quantity: 6, address: x4.

The sales office o, the delivery destination address x1 to x4, the delivery time [10:00] to [12:00], and the delivery routes rt1 and rt2 are drawn on the map mp12. Here, the first truck departs from the sales office o at 10:00, performs the delivery of the first house at 10:30, and performs the delivery of the second house at 11:00 according to the delivery route rt1. The second truck departs from the sales office o at 10:00, performs the delivery of the third house at 11:30, and performs the delivery of the fourth house at 12:00 according to the delivery route rt2. In other words, since the package quantity to be delivered is larger as compared with the example of the delivery record illustrated in FIG. 9, FIG. 12 illustrates an example in which the theoretical minimum number of trucks is determined to be two.

### (Example of Delivering by Two Trucks Depending on the Distance)

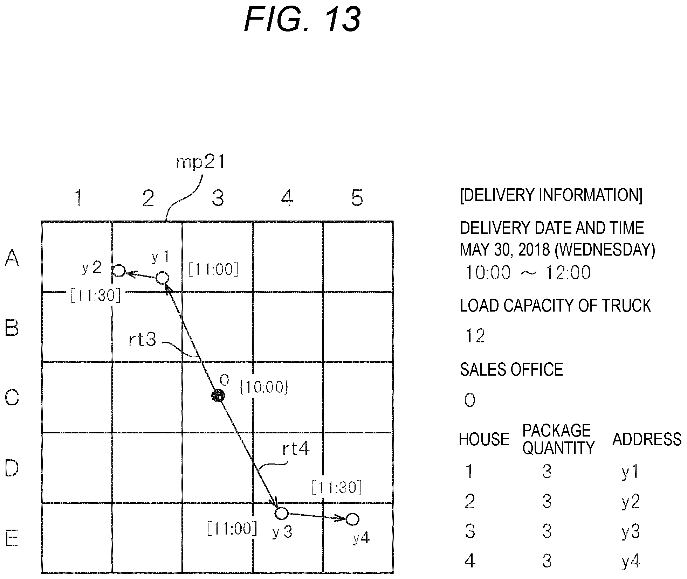

FIG. 13 is an explanatory diagram illustrating an example of a delivery record of the past delivered by two trucks due to a long distance from a sales office. Similar to the map mp11, the map mp21 illustrates the delivery target area which is under the control of the sales office and is divided into a plurality of segments represented by 5 rows ^{∗} 5 columns (corresponding to the above-mentioned example of m = n = 5).

The delivery record of the past (an example of delivery information) includes the delivery date and time: May 30, 2018 (Wednesday) 10: 00 to 12: 00, load capacity of truck: 12, sales office address: o, and delivery destination information. The delivery destination information includes delivery destination: first house, package quantity: 3, address: y1, delivery destination: second house, package quantity: 3, address: y2, delivery destination: third house, package quantity: 3, address: y3, delivery destination: fourth house, package quantity: 3, address: y4.

The sales office o, the delivery destination address y1 to y4, the delivery time [10:00] to [12:00], and the delivery routes rt3 and rt4 are drawn on the map mp21. Here, the first truck departs from the sales office o at 10:00, performs the delivery of the first house with address y1 at 11:00, and performs the delivery of the second house with address y2 at 11:30 according to the delivery route rt3. The second truck departs from the sales office o at 10:00, performs the delivery of the third house with address y3 at 11:00, and performs the delivery of the fourth house with address y4 at 11:30 according to the delivery route rt4. In other words, since a distance between the location information (in other words, the address or the place of residence of the customer) of each delivery destination and the sales office is far as compared with the example of the delivery record illustrated in FIG. 9, FIG. 13 illustrates an example in which the theoretical minimum number of trucks is determined to be two.

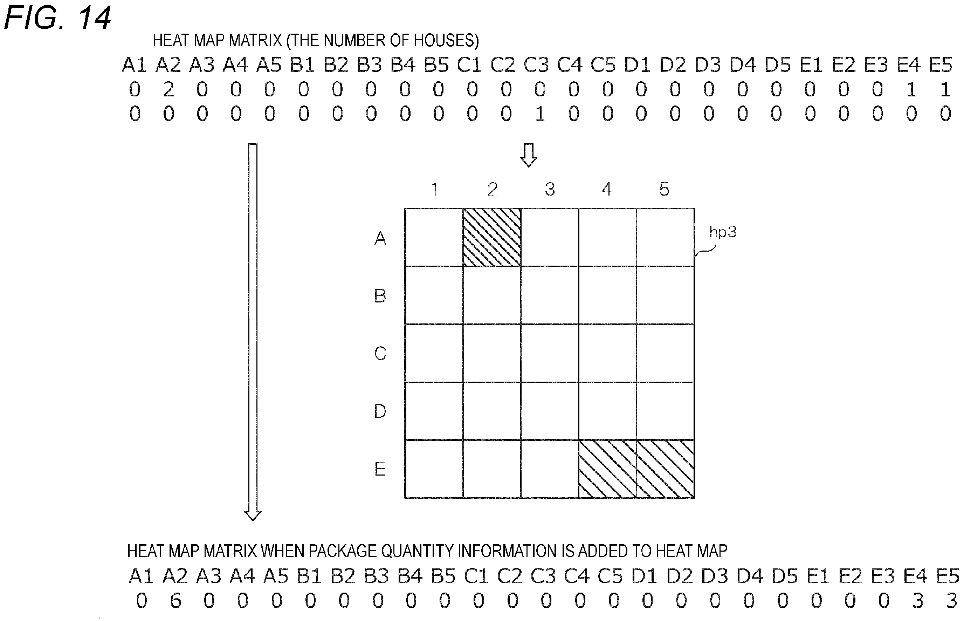

FIG. 14 is an explanatory diagram illustrating an example of a heat map hp3 and a matrix thereof generated during the learning based on the delivery record of the past illustrated in FIG. 13. The heat map hp3 is generated by the heat map generation unit 15 as an example and is input at the time of learning (see step S24 in FIG. 5). In the heat map hp3, the segments respectively represented by the matrix elements E4 and E5 are drawn in yellow (coarse hatch lines in the drawing). The segment represented by the matrix element A2 is drawn in orange (hatch lines finer than the coarse hatch lines that indicate yellow in the drawing).

Here, when the heat map hp3 is represented by a matrix indicating the number of houses since there are two houses as delivery destinations in the segment represented by the matrix element A2, the value 2 is registered in the matrix element A2. Similarly, since there is one house as a delivery destination in the segments respectively represented by the matrix elements E4 and E5, the value 1 is registered in each of the matrix elements E4 and E5. Further, since there is the sales office o in the segment represented by the matrix element C3, the value 1 is registered in the matrix element C3.

Further, when the heat map hp3 is represented by a matrix indicating the number of houses and the package quantity since there are six packages in the segment represented by the matrix element A2, the value 6 is registered in the matrix element A2. Similarly, since there are three packages in the segments respectively represented by the matrix elements E4 and E5, the value 3 is registered in each of the matrix elements E4 and E5. Since there is no package quantity in the other matrices, the value 0 is registered. As a result, by using the heat map hp3 with a matrix in which not only the number of houses but also the package quantity is added for learning, the package quantity can be added to the prediction of the number of trucks.

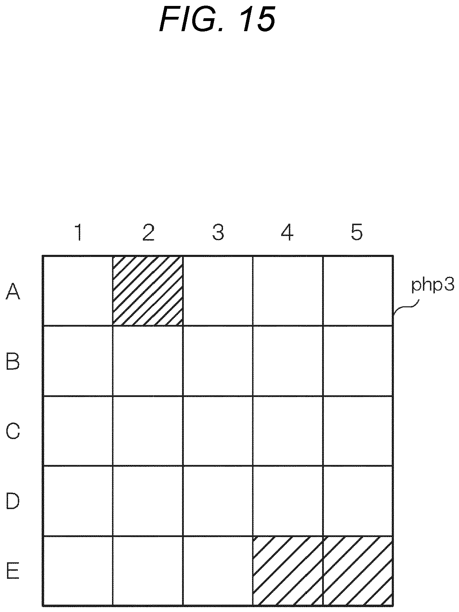

FIG. 15 is an explanatory diagram illustrating an example of the prediction heat map php3 output from the heat map learning model md2 using the future input variable. Here, the prediction heat map php3 is generated in the same distribution as the heat map hp3 generated based on the delivery record of the past illustrated in FIG. 14 but may be generated in a different distribution. The prediction heat map php3 is generated based on the delivery record of the past illustrated in FIG. 13 and quantitatively shows that two houses in the segment corresponding to the matrix element A2 of the heat map illustrated in FIG. 14, one house in the segment corresponding to the matrix element E4 of the same heat map, and one house in the segment corresponding to the matrix element E5 of the same heat map, as delivery destinations are respectively distributed.

### (Example of Delivering by Two Trucks Depending on the Number of Houses)

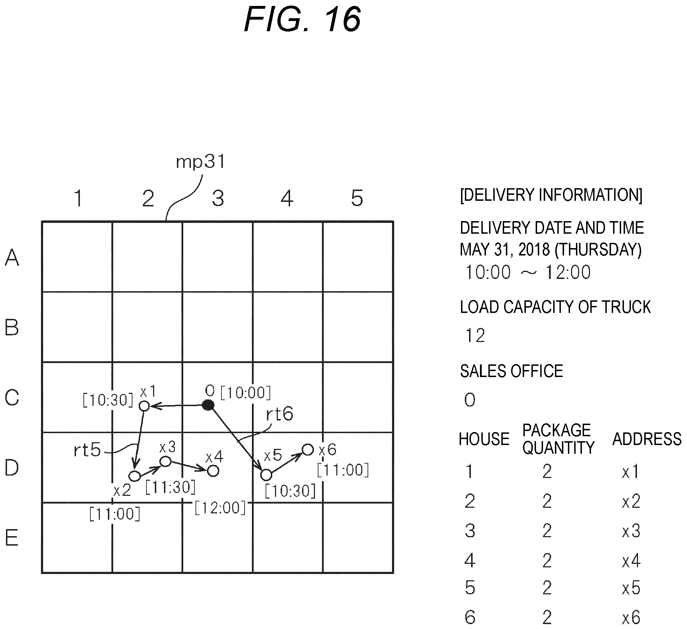

FIG. 16 is an explanatory diagram illustrating an example of a delivery record of the past delivered by two trucks due to a large number of houses. Similar to the map mp11, the map mp31 illustrates the delivery target area which is under the control of the sales office and is divided into a plurality of segments represented by 5 rows ^{∗} 5 columns (corresponding to the above-mentioned example of m = n = 5).

The delivery record of the past (an example of delivery information) includes the delivery date and time: May 31, 2018 (Thursday) 10: 00 to 12: 00, load capacity of truck: 12, sales office address: o, and delivery destination information. The delivery destination information includes delivery destination: first house, package quantity: 2, address: x1, delivery destination: second house, package quantity: 2, address: x2, delivery destination: third house, package quantity: 2, address: x3, delivery destination: fourth house, package quantity: 2, address: x4, delivery destination: fifth house, package quantity: 2, address: x5, delivery destination: sixth house, package quantity: 2, address: x6.

The sales office o, the delivery destination address x1 to x6, the delivery time [10:00] to [12:00], and the delivery routes rt5 and rt6 are drawn on the map mp31. Here, the first truck departs from the sales office o at 10:00, performs the delivery of the first house with address x1 at 10:30, performs the delivery of the second house with address x2 at 11:00, performs the delivery of the third house with address x3 at 11:30, and performs the delivery of the fourth house with address x4 at 12:00 according to the delivery route rt5. The second truck departs from the sales office o at 10:00, performs the delivery of the fifth house with address x5 at 10:30, and performs the delivery of the sixth house with address x6 at 11:00 according to the delivery route rt6. In other words, since the number of delivery destinations to be delivered (in other words, the number of houses) is larger as compared with the example of the delivery record illustrated in FIG. 9, FIG. 16 illustrates an example in which the theoretical minimum number of trucks is determined to be two.

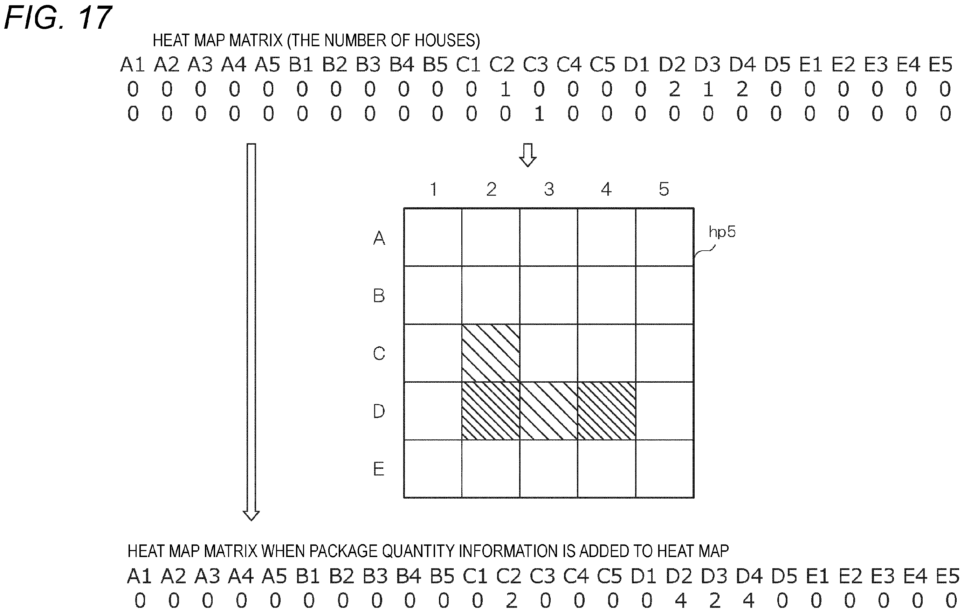

FIG. 17 is an explanatory diagram illustrating an example of a heat map hp5 and a matrix thereof generated during the learning based on the delivery record of the past illustrated in FIG. 16. The heat map hp5 is generated by the heat map generation unit 15 as an example and is input at the time of learning (see step S24 in FIG. 5). In the heat map hp5, the segments respectively represented by the matrix elements C2 and D3 are drawn in yellow (coarse hatch lines in the drawing). The segments respectively represented by the matrix elements D2 and D4 are drawn in orange (hatch lines finer than the coarse hatch lines that indicate yellow in the drawing).

Here, when the heat map hp5 is represented by a matrix indicating the number of houses since there is one house as a delivery destination in the segments respectively represented by the matrix elements C2 and D3, the value 1 is registered in each of the matrix elements C2 and D3. Similarly, since there are two houses as delivery destinations in the segments represented by the matrix elements D2 and D4, the value 2 is registered in the matrix elements D2 and D4. Further, since there is the sales office o in the segment represented by the matrix element C3, the value 1 is registered in the matrix element C3.

Further, when the heat map hp5 is represented by a matrix indicating the number of houses and the package quantity since there is one package in the segments respectively represented by the matrix elements C2 and D3, the value 2 is registered in each of the matrix elements C2 and D3. Similarly, since there are two packages in each of the segments represented by the matrix elements D2 and D4, the value 4 is registered in each of the matrix elements D2 and D4. Since there is no package quantity in the other matrices, the value 0 is registered. As a result, by using the heat map hp5 with a matrix in which not only the number of houses but also the package quantity is added for learning, the package quantity can be added to the prediction of the number of trucks.

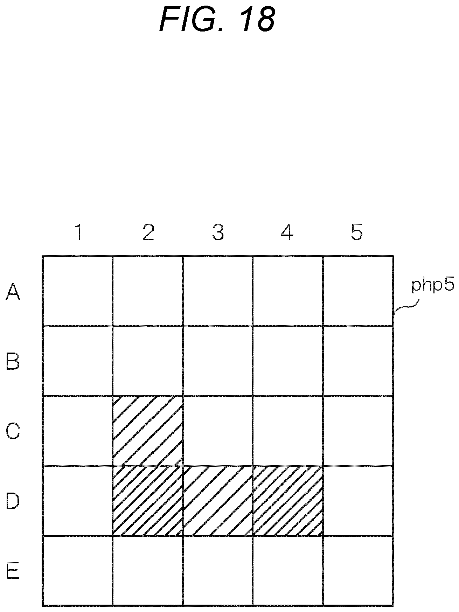

FIG. 18 is an explanatory diagram illustrating an example of the prediction heat map php5 output from the heat map learning model md2 using the future input variable. Here, the prediction heat map php5 is generated in the same distribution as the heat map hp5 generated based on the delivery record of the past illustrated in FIG. 17 but may be generated in a different distribution. The prediction heat map php5 is generated based on the delivery record of the past illustrated in FIG. 16 and quantitatively shows that one house in the segment corresponding to the matrix element C2 of the heat map illustrated in FIG. 17, two houses in the segment corresponding to the matrix element D2 of the same heat map, one house in the segment corresponding to the matrix element D3 of the same heat map, and two houses in the segment corresponding to the matrix element D4 of the same heat map, as delivery destinations are respectively distributed.

As described above, in the demand prediction device 5 according to Embodiment 1, the input unit 50 (an example of the input variable acquisition unit) acquires the input variable that includes the delivery date and time input by the user's operation. A heat map prediction unit 17 predicts the prediction heat map php corresponding to the input variable by using the heat map learning model md2 (an example of the heat map prediction model) for predicting a heat map hp which indicates, for each segment, the number of houses of the delivery destinations (an example of the number of distributions) distributed in at least one of the plurality of segments constituting the delivery target area. The second truck number prediction unit 20 (an example of the minimum truck number prediction unit) predicts the minimum number of trucks corresponding to the prediction heat map php (an example of the predicted heat map) by using the minimum truck number learning model md3 (an example of the minimum truck number prediction model) for predicting the minimum number of trucks (an example of the delivery vehicle) for delivering packages to the delivery destinations. The truck number determination unit 21 determines the predicted minimum number of trucks as the number of trucks to be used on the delivery date and time included in the input variable.

As a result, in distributions (for example, delivery of packages), since the demand prediction device 5 can predict the number of trucks required for home delivery such as private homes, it can support the realization of an efficient delivery plan. Further, by representing the number of houses of the delivery destinations in the heat map that is quantitatively shown by segmenting instead of the addresses of individual delivery destinations, the demand prediction device 5 can increase the amount of learning data for generating the respective heat map learning model md2 and the minimum truck number learning model md3 for predicting the number of houses of the delivery destinations corresponding to the input variable that is input from the input unit, and can improve the learning accuracy.

Further, in the demand prediction device 5, the information acquisition unit 11 (an example of the delivery record acquisition unit) acquires the delivery record information of the past including the delivery date and time and the location information of each of the plurality of delivery destinations. The heat map generation unit 15 determines the segment in which each of the plurality of delivery destinations is distributed by using the addresses of each of the plurality of delivery destinations (an example of location information) and generates a heat map hp corresponding to each of the plurality of delivery destinations for each delivery record information of the past. The heat map learning unit 16 generates the heat map learning model md2 based on learning the relationship between the external information of the past (an example of the delivery record information) and the heat map hp generated for each external information of the past. As a result, by using the heat map learning model md2, which can predict the number of delivery destinations (in other words, the number of houses) within the delivery target area based on the delivery date and time and the location information of the delivery destination of the past, the demand prediction device 5 can easily generate a highly reliable prediction heat map php corresponding to the future input variable and can improve the prediction accuracy of the heat map.

Further, in the demand prediction device 5, the information acquisition unit 11 (an example of the delivery record acquisition unit) acquires the heat map hp (an example of the delivery record information of the past) including the delivery date and time and the addresses of each of the plurality of delivery destinations. The minimum truck number determination unit 18 determines the minimum number of trucks for delivering packages to each of the plurality of delivery destinations by using each of the addresses of the plurality of delivery destinations. The minimum truck number learning unit 19 generates the minimum truck number learning model md3 (an example of the minimum truck number prediction model) based on learning the relationship between the heat map hp (an example of the delivery record information) and the minimum number of trucks determined according to the delivery record information of the past. As a result, since the demand prediction device 5 can generate the minimum truck number learning model md3 that can predict the minimum number of trucks capable of delivering according to the number of delivery destinations (in other words, the number of houses) included in the delivery record information based on the delivery record of the past, it is possible to easily predict the minimum number of trucks with high reliability corresponding to the future input variable, and improve the prediction accuracy of the minimum number of trucks.

Further, in the demand prediction device 5, the information acquisition unit 11 (an example of the delivery record acquisition unit) acquires the delivery record information of the past including the delivery date and time and the package quantity delivered. The package quantity learning unit 12 generates the package quantity learning model md1 (an example of the package quantity prediction model) for predicting the package quantity to be delivered based on learning the relationship between the delivery date and time, and the package quantity delivered. As a result, the demand prediction device 5 can generate the package quantity learning model md1 capable of predicting the package quantity to be delivered based on the delivery date and time and the delivery record of the past, and can improve the prediction accuracy of the package quantity.

Further, in the demand prediction device 5, the package quantity prediction unit 13 predicts the package quantity corresponding to the future input variable by using the package quantity learning model md1. As a result, the demand prediction device 5 can easily predict a highly reliable package quantity corresponding to the future input variable by using the package quantity learning model md1.

Further, in the demand prediction device 5, the first truck number prediction unit 14 (an example of the truck number prediction unit) predicts the number of trucks that deliver packages of the predicted package quantity based on the predicted package quantity and the load capacity of the truck. The truck number determination unit 21 determines the larger value of the predicted value of the number of trucks based on the predicted package quantity and the predicted value of the number of trucks based on the prediction heat map php as the number of delivery vehicles to be used at the delivery date and time included in the input variable. As a result, by determining the minimum number of trucks with a larger value as the number of trucks to be used corresponding to the future input variable, the demand prediction device 5 can reduce the risk of failing to meet the delivery requirement (complete all the delivery within time).

Further, in the demand prediction device 5, the truck number determination unit 21 outputs information related to the determined number of trucks to be used to the output unit 60. As a result, the user will be able to ascertain the number of trucks to be used and strive to secure the required number of trucks as soon as possible. Further, it can contribute to the formulation of a delivery plan for trucks.

Further, in the demand prediction device 5, the future input variable includes information on the delivery date and time, day of the week, weather forecast, and event. As a result, the demand prediction device 5 can accurately predict the number of trucks in consideration of various factors (in other words, the delivery date and time, the day of the week, the weather forecast, the event name, or the like) affecting the delivery of the package. In particular, information on events, such as information on a campaign for commodities that are packages, an athletic meet or a concert held in the vicinity of the delivery destination, a road construction, or the like, enhances the prediction accuracy of the number of trucks.

Although various embodiments have been described with reference to the drawings, it goes without saying that the present disclosure is not limited to such examples. It is clear that a person skilled in the art can come up with various modification examples, change examples, replacement examples, addition examples, deletion examples, and equality examples within the scope of the claims, and it is understood that the above-mentioned examples also belong to the technical scope of the present disclosure. Further, the respective components in the various embodiments described above may be combined in any combination without departing from the spirit of the invention.

In the above-described embodiment, for example, a use case in which a transportation company delivers a package to a private house, a company, or the like has been described as an example, but the same applies to use cases in which a store delivers commodities that the store handles, such as commodities, to a private home, a company, or the like.

In the above-described embodiment, a truck has been illustrated as a delivery vehicle but it may be a vehicle such as a compact car, a one-box car, or a motorcycle.

In the above-described embodiment, the delivery date and time have been described as the year, month, date, and time, but it may be set according to the use case such as date only, day of the week only, or the like.

### (Embodiment 2)

In Embodiment 1, a use case of delivering a package to an individual delivery destination (in other words, a private home) such as home delivery is shown. In Embodiment 2, a use case in which Embodiment 1 is expanded and commodities or the like are transported by truck from a warehouse or a production base to a store or the like that provides the commodities to consumers will be described. Note that the content of Embodiment 1 is completely independent of that of Embodiment 2 (in other words, the content is separated from the content of Embodiment 2), but Embodiment 2 is a developmentally expanded form based on the configuration according to Embodiment 1.

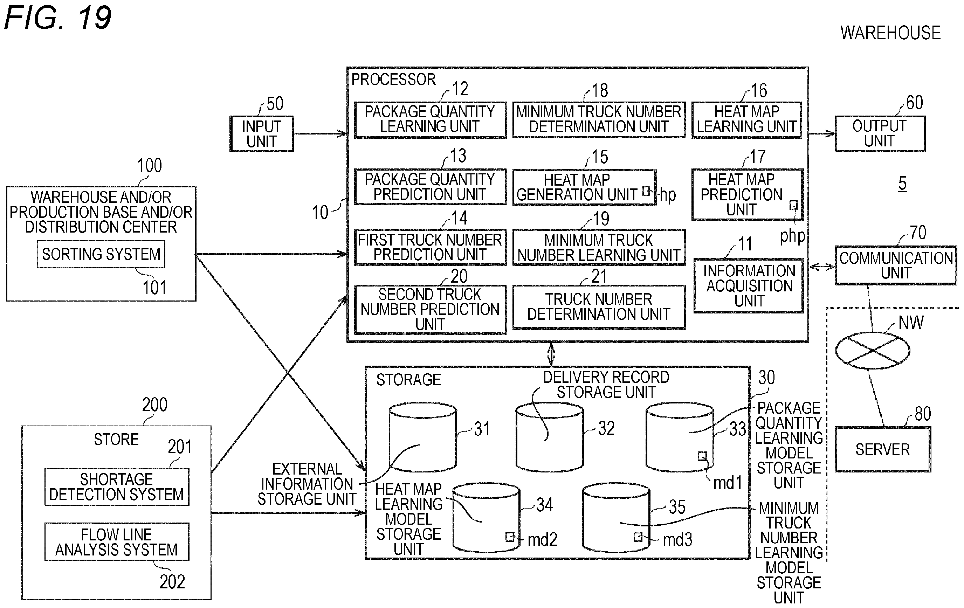

FIG. 19 is a block diagram illustrating a hardware configuration example of a demand prediction system according to Embodiment 2. The demand prediction system according to Embodiment 2 is configured to include the demand prediction device 5 according to Embodiment 1. The same components as those in Embodiment 1 are used with the same reference numerals, and the description thereof will be omitted.

The demand prediction system includes a distribution center 100, a store 200, a demand prediction device 5, an output unit 60, and a server 80. Note that the distribution center 100 is a facility that serves as a base for delivering commodities (packages) in, for example, a warehouse, a production base, or the like. As illustrated in FIG. 19, in the warehouse and/or the production base and/or the distribution center 100, a system 101 for sorting commodities (packages) which are respectively ordered by the consumers or stores is provided.

Further, the store 200 is provided with a shortage detection system 201 that detects a rack inventory status or a shortage of commodities related to the commodity quantity in the inventory displayed on the rack, and a flow line analysis system 202 for analyzing flow lines of consumers moving inside the store. Note that the flow line analysis system 202 provided in the store 200 is not an essential configuration and may be omitted.

The output unit 60 according to Embodiment 2 may be provided at a place different from that of Embodiment 1. A plurality of demand prediction devices 5 may be provided in addition to the demand prediction device 5. As a result, the required number of trucks determined by the processor 10 is promptly notified to the warehouse and/or the production base and/or the distribution center 100, or the store 200. Therefore, since the user strives to secure the required number of trucks as soon as possible, it can contribute to the formulation of a delivery plan for trucks. Further, the installation place of the output unit 60 may be other than the warehouse and/or the production base and/or the distribution center 100, or the store 200, or may be, for example, a company, a department, or the like that owns or manages a truck.

In Embodiment 2, the processor 10 may directly or indirectly receive package volume data of packages from the sorting system 101 and calculate the volume of the package to be delivered based on the package volume data. As a result, the user can use actual measurement data which is close to real time and obtained from the sorting system 101 and can calculate the required number of trucks with higher accuracy in a shorter time when arranging the required number of trucks. Note that the package volume data includes package specifying information that can specify the package acquired from label record information read by a label reader 110, which will be described later, and a distance image showing the volume, size, or the like of the package generated by the distance image sensor 22.

Further, the processor 10 may directly or indirectly receive the commodity demand prediction information based on the shortage information of the shortage detection system 201 of the store in order to predict the package quantity to be delivered and use the information thereof. The shortage information is information related to the commodities (inventory) on the racks installed in the store, which are detected by the shortage detection system 201 described later (for example, information that means a state in which shortage occurred in a specific commodity or in the inventory where a specific commodity is placed (in other words, in a state where the number of displays is less than the default number of displays)). As a result, since the sorting system 101 can use actual measurement data which is close to real time and obtained from the detection system 201, it is possible to calculate with higher accuracy. Note that the shortage information includes, for example, notification information including the commodity information, and a detection result and/or information based on the detection result by the shortage detection unit 223. The shortage information is, for example, information in which the shortage detection of the commodity 270 is notified (it may be referred to as "notification information", "shortage information", or "alert information").

Further, the shortage information may be the notification information generated based on the information associated with one or both of the detection result by the shortage detection unit 223 and the detection result by the rack label detection unit 221 and rack allocation information 400. In this case, the shortage information is, for example, defined as the notification information including the place (shortage area) related to the shortage detection of the commodity 270 and/or the commodity name of the shortage detected commodity 270 based on the information associated with the detection result by the shortage detection unit 223 and the rack allocation information 400.

The information acquisition unit 11 according to Embodiment 2 acquires the external information of the past stored in the external information storage unit 31, the package quantity included in the delivery record information of the past stored in the delivery record storage unit 32, and the address of the delivery destination and delivery route included in the delivery record information of the past, and receives the package volume data from the sorting system 101 described above and the shortage information and/or the commodity demand prediction information from the shortage detection system 201. The commodity demand prediction information may be generated in the demand prediction device 5 after the information acquisition unit 11 receives the shortage information, or may be generated in the shortage detection system 201 and acquired by the information acquisition unit 11.

Further, in Embodiment 2, the package volume data and/or the commodity demand prediction information is treated as a part of the external information and/or the delivery record described in Embodiment 1 and is used when the first predicted truck number value and/or the second predicted truck number value is/are calculated. More specifically, the package volume data and/or the commodity demand prediction information may be used to generate at least one of the package quantity learning model md1, the heat map learning model md2, and the minimum truck number learning model md3 according to Embodiment 1, and may be used for predicting the prediction of the package quantity, calculation of the heat map hp, prediction of the minimum number of trucks, or the like. Note that the commodity demand prediction information is generated by using the shortage information, and represents the degree, number, quantity, or the like of the demand for the target commodity at the target store. In this way, the package volume data and/or the commodity demand prediction information are/is used to determine the number of trucks to be used.

Noe that the processor 10 in Embodiment 2 does not necessarily have to calculate both the first predicted truck number value and the second predicted truck number value. The processor 10 may determine the number of trucks to be used by using one of the calculation results.

The input unit 50 in Embodiment 2 receives the future (in other words, from now on or future to be predicted) input variable by the input operation of the user of the demand prediction device 5, but the input of the input variable is not limited to user's input operation. The input unit 50 may be automatically input by the demand prediction device 5.

The package quantity learning unit 12 in Embodiment 2 is configured with, for example, a program using AI (Artificial Intelligent), but AI is not necessarily used. Further, the demand prediction device 5 in Embodiment 2 may not necessarily have to use the heat map, divide the area including the entire supply chain managed by the demand prediction device 5 into individual segments, and calculate the delivery quantity, the number of delivery destinations, or the like on a segment-by-segment basis. Note that in Embodiment 2, the supply chain includes at least a warehouse and/or a production base and/or a distribution center and a store.

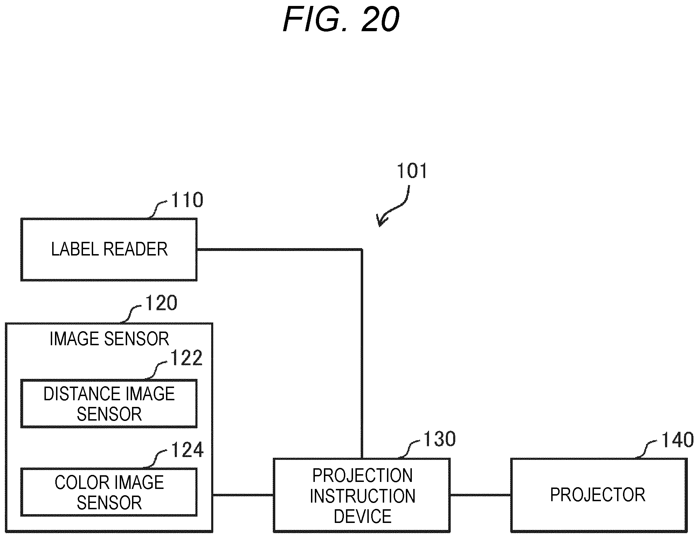

Next, the sorting system 101 will be described with reference to FIG. 20. FIG. 20 is a block diagram illustrating a configuration example of a package sorting system according to the embodiment. The package sorting system 100 illustrated in FIG. 20 is installed in, for example, a production base such as a factory, a warehouse, or a distribution center. The package sorting system 101 includes a label reader 110, an image sensor 120, a projection instruction device 130, and a projector 140.

The package sorting system 101 is a system that supports the work of workers who sort the package conveyed by the transporting conveyor. The package sorting system 101 is installed in a distribution center owned by, for example, a retailer, a wholesaler, an Internet distributor, or the like. The package to be sorted generally has a substantially rectangular parallelepiped shape, but the outer shape thereof is not particularly limited, and the type of package is not particularly limited. Note that the configuration of the package sorting system is not limited to that illustrated in FIG. 20. For example, the quantity of each component can be appropriately changed according to the purpose, such as connecting a plurality of image sensors 120, a projection instruction device 130, and a projector 140 to one label reader 110.

The label reader 110 as a reading device is a device including various elements such as a lens and an image sensor (not illustrated). By using the label reader 110, the worker can read the label record information that records various information related to the package from the label attached to the package conveyed by the transporting conveyor. As a result, the worker can specify the package by using the read label record information. The label reader 110 defines the package specifying information based on the read information.

The image sensor 120 is an image capturing device including various elements such as a lens and an image sensor (not illustrated). The image sensor 120 is generally configured as an image capturing camera. The image capturing camera is a three-dimensional camera, a plurality of two-dimensional cameras, or the like. The image sensor 120 includes a distance image sensor 122 and a color image sensor 124.

The distance image sensor 122 captures an image of the package conveyed by the transporting conveyor and generates a distance image. The generated distance image is used to specify the location of the package as information indicating the location of the package, the distance to the package, the volume or size of the package, and the like. Note that the distance image refers to an image containing distance information indicating a distance from the image capturing location to the location indicated by each pixel (including the surface of the package) (in other words, in the present disclosure, the term "image" includes a distance image.). Further, the word a "distance image" includes an image that cannot be recognized as an image by the human eye, such as a table in which numerical values indicating distances are listed. In other words, the "distance image" may be any information indicating the relationship between the coordinates and the distance within the image captured area, and a data structure thereof does not matter. Therefore, the distance image sensor 122 may be replaced by another sensing device (for example, an ultrasonic sensor, an infrared sensor, a stereo camera, a monocular video camera, or the like).

The color image sensor 124 images the package for which the distance image is generated and generates the color image. The "color image" refers to an image representing the color of the surface of the package with a predetermined gradation, and the "gradation" includes not only 256 gradations of RGB but also all kinds such as grayscale. In the present disclosure, the color image sensor 124 is used to track each package specified by the distance image sensor 122. The color image sensor 124 may be replaced by another sensing device (for example, an ultrasonic sensor, an infrared sensor, a stereo camera, a monocular video camera, or the like).

In other words, in the present disclosure, the term "image" includes at least one or both of the distance image and the color image. Further, the sensing information is information output from the image sensor as a sensing device including the distance image sensor and the color image sensor.

Therefore, the distance image sensor 122 and the color image sensor 124 according to Embodiment 2 will be described using the image sensor 120 (including the distance image sensor 122 and the color image sensor 124) as an example of the sensing device. Further, the image sensor 120 according to Embodiment 2 will be described by using the distance image which is the output result of the distance image sensor 122 and the color image which is the output result of the color image sensor 124 as an example of sensing information.

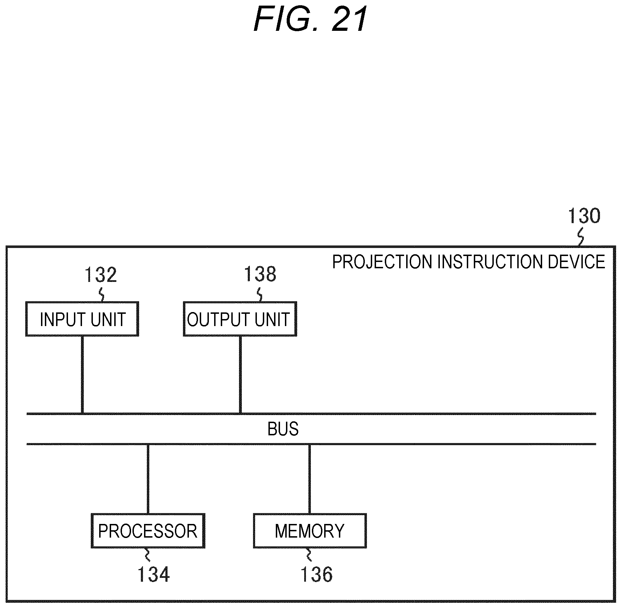

FIG. 21 is a block diagram illustrating a configuration example of a projection supporting device according to Embodiment 2. The projection instruction device 130 plays a role as a calculation device in the package sorting system 101. As illustrated in FIG. 21, the projection instruction device 130 is configured to include an input unit 132 connected via a bus, a processor 134, a memory 136, and an output unit 138.

The input unit 132 receives input of package specifying information capable of specifying the package acquired from the label record information read by the label reader 110, a distance image generated by the distance image sensor 22, and a color image generated by the color image sensor 124.

The processor 134 is constituted by a general calculation device and generates a projection image to be projected on the package based on the package specifying information, the distance image, and the color image. Note that in the present disclosure, the "processor" does not mean only a single processor. The term "processor" is also used as a term meaning an operation subject when a plurality of processors having the same purpose and processors having different purposes (for example, not only a general-purpose CPU (Central Processing Unit) but also a GPU (Graphic Processing Unit)) jointly perform processing.

In the memory 136 as an example of the storage device, the processor 134 performs operations such as reading a control program necessary for various processes and saving data. In other words, the processor 134 and the memory 136 cooperate to control various processes by the projection instruction device 130.

The output unit 138 outputs the projection image generated by the processor 134 to the projector 140.

The projector 140 is constituted by a general projection device, projects projection light including the projection image received from the projection instruction device 130 onto the package, and displays the projection image on the package.

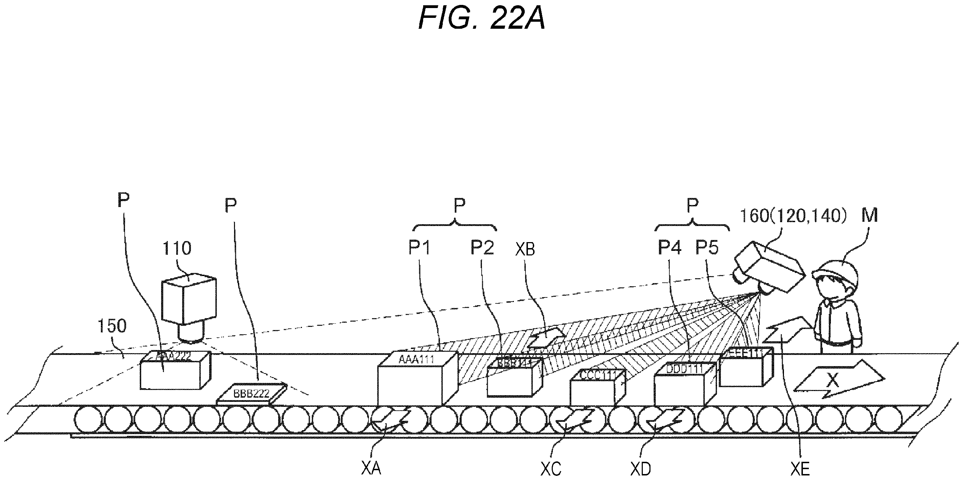

The package sorting system 101 is configured by connecting the label reader 110, the image sensor 120 (the distance image sensor 122 and the color image sensor 124), the projection instruction device 130, and the projector 140 so as to be capable of wired communication or wireless communication. Further, the package sorting system 101 can configure any two or more devices of the label reader 110, the image sensor 120, the projection instruction device 130, and the projector 140 as an integrated device. For example, the package sorting system 101 can combine the image sensor 120 and the projector 140 to form an integrated image capturing and projection device (see FIG. 22A).

### [Outline of System]

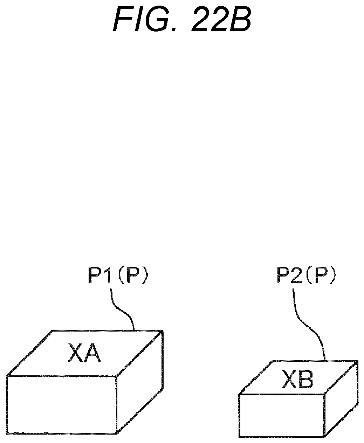

FIG. 22A is a conceptual diagram illustrating an operation example of the package sorting system 101. FIG. 22B is a diagram illustrating an example of projection with respect to a package P. Hereinafter, a status in which the package sorting system 101 is installed in the distribution center and is in operation will be described with reference to FIGS. 22A and 22B. Note that the projection supporting device 130 is omitted in FIGS. 22A and 22B.

According to the method in the related art, a worker M assigned on each transporting conveyor 150 visually checks each of the labels attached to each of the packages P conveyed in a direction of the arrow X by the transporting conveyor 150. Further, when the package in charge of delivery arrives, the worker M needs to pick up the package (pickup) and temporarily place the package near the worker M's own feet, a basket, a truck bed, or the like. However, when the worker M visually sorts each of the packages P, the work efficiency of the worker M is limited, and therefore it is necessary to suppress the conveyance speed of the transporting conveyor 150 to a predetermined speed or less. As a result, with the method in the related art, the limit value of the package quantity that the worker M can sort within a unit time (in other words, the work efficiency of the worker M) is low. Further, in the method in the related art, since the worker M makes a misunderstanding when visually recognizing the label, there is a possibility of causing an erroneous sorting. In recent years, the package quantity distributed has increased, and these problems are receiving more attention.

In the package sorting system 101 illustrated in Embodiment 2, as illustrated in FIG. 22A, the label reader 110 disposed on the upper part of the transporting conveyor 150 reads a label attached to each of the packages P conveyed by the transporting conveyor 150. The label contains label record information, including various information related to the package. The label record information includes information related to a package specification number, a sender's name, an address, a telephone number, a recipient's name, an address, a telephone number, a package type, or the like which are individually assigned to the package. Note that the reading process of the label is performed by the worker M in charge, and may be performed by manually applying a barcode reader as the label reader 110 to the barcode in the label to read the label. As a result, the package sorting system 101 shown in Embodiment 2 does not require the visual sorting work of the worker M and can improve the work efficiency of the worker M (in other words, the limit value of the package quantity that can be sorted).

The image sensor 120 captures an image (a distance image and a color image) of the package P conveyed by the transporting conveyor 150 and acquires information such as the location of the package P, the distance to the package P, the volume and size of the package P (when the package P is a rectangular parallelepiped, the length of three sides), the color of the package P, and the pattern of the package P. The dislocation location of the label reader 110 and the image sensor 120, the type of the sensing device, and the order of the processes are not particularly limited to the illustrated form. As described above, in Embodiment 2, the image sensor 120 and the projector 140 are configured as an integrated image capturing and projection device 160 and are disposed on the upper part of the transporting conveyor 150.

Note that the projection supporting device 130 (not illustrated) is configured with, for example, a computer disposed in the vicinity of the transporting conveyor 150 or in another room. The projection supporting device 130 generates a projection image to be displayed on the package P (for example, on the upper surface when the package P is a rectangular parallelepiped shape) based on the information for specifying the package acquired by the label reader 110, the distance image generated by the image sensor 120, and the color image. The projection instruction device 130 outputs a projection instruction of the projection image to be projected on the package P to the projector 140.

The projector 140 as an example of the image projection device that has received the projection instruction projects the projection light including the projection image generated by the projection instruction device 130 onto the package P, and displays the projection image on the package P. Here, the projection image displayed on the package P is, for example, an image of each of the characters XA and XB having colors indicating the sorting place corresponding to the address at the delivery destination of the package P (see FIG. 22B). The projection image may correspond to, for example, a number of a truck that carries the sorted package P (the number of the truck itself, the parking lot number, or the like), a number of a rack, a box, or the like that should be brought into the truck or the like. Further, the projection image is not limited to those that directly corresponding to a rack number, a box number, or the like, and may correspond to a number of a shooter or the like which moves the picked up package to another place, a truck, or the like.

Further, since the parking location of the delivery vehicle such as a truck changes frequently depending on the traffic status and the like, it may be difficult to match the sorting destinations seen from the periphery of the transporting conveyor 150 at any time. Therefore, the projector 140 may include a shooter between the transporting conveyor 150 and the delivery vehicle such as a transporting truck, and project the shooter number on the package P around the transporting conveyor 150. As a result, the worker M can handle the changes in the sorting destination by re-disposing the exit of the shooter or the like without changing the configuration around the transporting conveyor 150 at any time.

The projector 140 projects various types of projection images depending on the status. As another example of displaying numbers, the projection image may be a zip code corresponding to the delivery destination address, a number that can identify the worker M1 who should pick up the package P or the like. As another example, the projector 140 may project an arrow indicating the sorting direction (right, left, or the like with respect to the conveyance direction of the transporting conveyor 150) or characters ("left", "right", or the like).

Note that in the present disclosure, the "image projection device" is not limited to a device that directly projects a light beam onto a package. In the present disclosure, the "image projection device" also includes eyeglasses capable of displaying an image. In other words, in the present disclosure, when it is expressed that the projection light is projected on the package, the image is displayed on the package, the image is projected on the package or the like, the expression also includes making the worker recognize that the projection light is projected on the package in a pseudo manner through the eyeglasses capable of displaying the image. In other words, when the worker wears special eyeglasses capable of displaying an image, the projection light may be projected even when the projection image is superimposed on the image of the package P visually recognized through the eyeglasses.

In FIG. 22A, the worker M in charge of picking up the package (other workers are omitted) stands in the vicinity of the transporting conveyor 150 and picks up the package that has reached each of the areas in charge from the transporting conveyor 150 as indicated by the respective characters XA, XB, XC, XD, XE, or the like.

For example, the package PI has the package specifying information indicated by "AAA111" on the label. Here, it is assumed that the fact, in which the package becomes the sorting target in the area A, is specified in the package specifying information indicated by "AAA111". In this case, when the package PI arrives at the specific area, the processor 134 outputs the generated projection image as illustrated in FIG. 22B to the projector 140. The projector 140 projects the input projection image onto the package P1. Therefore, the worker M in the area can easily pay attention to the package PI, which the worker M should pick up, that has arrived at the specific area that is in charge of the worker M. As a result, it becomes possible to sort packages more efficiently and accurately.

In Embodiment 2, as illustrated in FIG. 22A, one projector 140 may switch the presence or absence of projection of a plurality of specific areas, or for each of the plurality of projectors 140 may switch the presence or absence of projection in each of the specific areas in charge.

Hereinafter, the outline of the package sorting operation performed by the projection instruction device 130 in the package sorting system 101 according to Embodiment 2 will be described.

### [Outline of Operation]

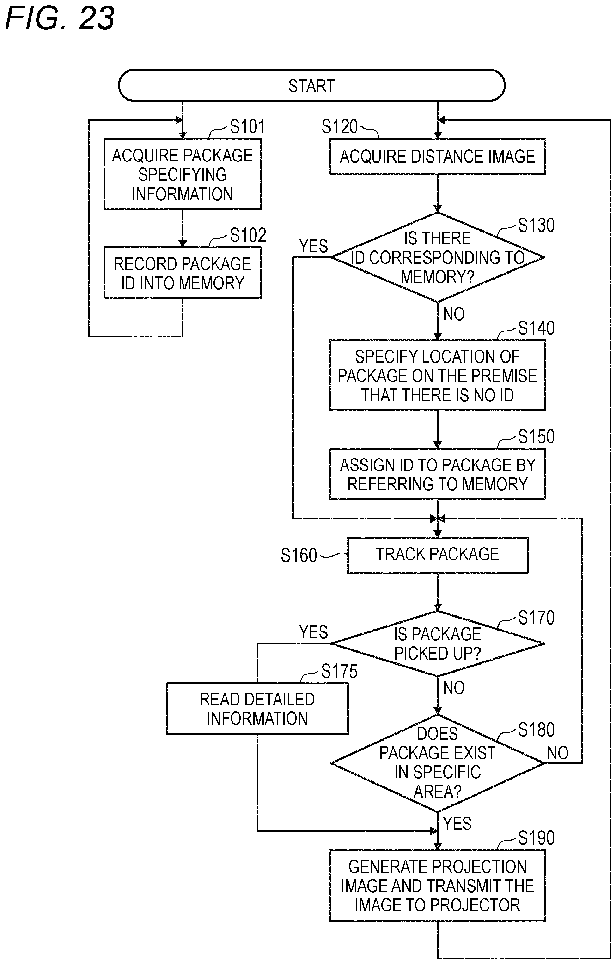

FIG. 23 is a flowchart illustrating an example of an operation procedure of the projection instruction device 130 according to Embodiment 2.

First, the worker reads the label record information of the package label by using the label reader 110. The input unit 132 acquires the package specifying information corresponding to the label record information read by the label reader 110 (S101). Here, the package specifying information is information including at least one piece of information similar to a package specification number, a sender's name, an address, a telephone number, a recipient's name, an address, a telephone number, a package type, or the like which are individually assigned to the package.

The processor 134 assigns an ID as a package specification number for specifying the package corresponding to the package specifying information and records the ID into the memory 136 together with the time information corresponding to the time when the ID is assigned (S102). Note that the ID recorded in the memory 136 may be the package specification number originally recorded in the package specifying information, or the projection instruction device 130 may generate and assign a new ID.

On the other hand, in parallel with the processes of steps S101 and S102, the input unit 132 acquires the distance image as the sensing information from the distance image sensor 122 after capturing the distance image of the package by the distance image sensor 122 in the image sensor 120 (S120).

The processor 134 determines whether or not the ID corresponding to the package, which exists in the acquired distance image, exists in the memory 136 (S130). Note that as an example of the method of determining whether or not the ID corresponding to the package existing in the distance image exists in the memory 136, the following procedure can be mentioned.

The processor 134 calculates the time required for the package to move between the label reader 110 and the distance image sensor 122 based on the distance (known) between the label reader 110 and the distance image sensor 122, and the speed of the transporting conveyor 150. Thereafter, by subtracting the calculated time from the time when the distance image is acquired, the processor 134 estimates the time when an ID is assigned to the package existing in the distance image by the label reader 110 (and the processor 134). As a result, the processor 134 can estimate whether or not the ID assigned in the vicinity of the estimated time is the ID corresponding to the package existing in the acquired distance image.

Further, the determination method in the process in step S130 described above is not limited to this, and a method of installing another distance image sensor in the vicinity of the label reader 110 may be used. In this method, by tracking the package, in which the ID is assigned, using another distance image sensor installed in the vicinity of the label reader 110 from the time the ID is assigned by the label reader 110 (and processor 134), the processor 134 measures a distance between the package (and ID) and the label reader 110 at each time. As a result, the processor 134 can estimate the package ID in the distance image acquired in the predetermined step S120 from the distance between the measured package (and ID) and the label reader 110, the distance of the package in the distance image acquired in step S120, and the distance between the two distance image sensors (known).

In this way, the processor 134 determines whether or not the ID corresponding to the package included in the distance image exists in the memory 136 (S130). In other words, as described in the description of the process in step S102, the memory 136 records the package specifying information, the ID, the time information corresponding to the time when the ID is assigned, and the like in advance. On the other hand, for example, as described above by subtracting the time required for the package to move between the label reader 110 and the distance image sensor 122 from the time when the distance image is acquired, the processor 134 can estimate the time when the ID is assigned to the package existing in the distance image by the label reader 110 (and the processor 134). The processor 134 compares the time information recorded in the memory 136 in advance with the estimated time, and when these values are close (for example, when the time difference is equal to or less than a predetermined threshold value time or the like), it can be determined that the ID corresponding to the package included in the distance image exists in the memory 136. When it is determined that the ID corresponding to the package exists in the memory 136 (S130, Yes), the process proceeds to the process of step S160 and subsequent steps.

On the other hand, in the process of step S130, when it is determined that the ID corresponding to the package does not exist in the memory 136 (S130, No), the processor 134 specifies the location of the package again on the premise that the ID is not assigned to the package (S140). The processor 134 assigns the ID to the specified package (S150).

Further, in parallel with the above steps, the color image sensor 124 generates a color image of each package for which the distance image is acquired. Based on the color image from the color image sensor 124 acquired by the input unit 132, the processor 134 tracks the package with the ID that is conveyed and moved by the transporting conveyor 150 (S160).

Similar to the process in step S160, the processor 134 determines whether or not the tracked package has been picked up by the worker based on the color image (S170).

In the process of step S170, when it is determined that the package has not been picked up by the worker (S170, No), the processor 134 determines whether or not the package exists in a specific area described by the package (a predetermined sorting area where the package should be picked up) (S180).

In the process of step S180, when it is determined that the package exists (reaches) in the specific area (S180, Yes), the processor 134 generates a projection image and transmits the generated image to the projector 140 (S190).

In the process of step S180, when it is not determined that the package exists (reaches) in the specific area (S180, No), the processor 134 returns to step S160, and the processor 134 continues tracking the package.

Further, in the process of step S170, when it is determined that the package has been picked up by the worker (S170, Yes), the processor 134 reads the detailed information of the package from the memory 36 (S175).

The projection instruction device 130 (or the processor 134) generates a projection image including the detailed information of the package read from the memory 36, and outputs the projection image generated by the output unit 138 to the projector 140 (S190). The projector 140 projects the projection image acquired from the projection instruction device 130 onto the corresponding package.

The above is an example of an operation procedure performed by the processor 134 and the like of the projection instruction device 130 according to Embodiment 2. Note that the example of the operation procedure of the projection supporting device 130 illustrated in FIG. 23 is not limited to the above. For example, the determination process or the like in step S170 can be omitted. Further, as the determination method in the process of step S170, it is also possible to use a contact determination between the worker's hand and the package, a color image, a distance image, or the like.

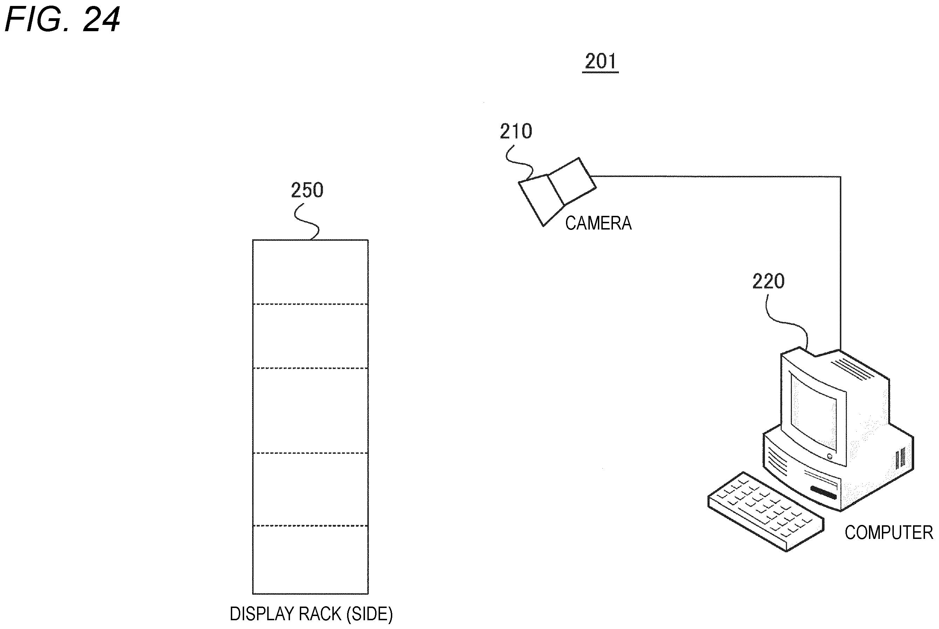

Next, the shortage detection system 201 will be described with reference to FIGS. 24 to 31.

### [System Configuration Example]

FIG. 24 is a block diagram illustrating a configuration example of an inventory management system according to Embodiment 2. The inventory management system 201 illustrated in FIG. 1 may include, for example, a camera 210 and a computer 220. Note that the "inventory management system" may be paraphrased as the "inventory monitoring system".

The camera 210 is installed inside, for example, a store that sells commodities, and captures an image of an area where the commodities are displayed (for example, an area where a display rack 250 of the commodity is installed). The business type or the business style of the store where the display rack 250 is installed, and the commodity type handled by the store are not limited.

The display rack 250 may be provided, for example, in a supermarket, a convenience store, a department store, a mass retailer, a discount store, or a shop or a sales booth (or a sales corner) installed in various facilities. Further, the display rack 250 may be provided not only indoors but also outdoors.

The camera 210 may be a dedicated camera for capturing an image of the area including the display rack 250 or may be used in combination with a camera used for other applications or purposes such as a security camera. Further, a plurality of cameras 210 may be provided in the inventory management system 201.

The image capturing target of the camera 210 (which may be paraphrased as the "monitoring target") and the display rack 250 may be associated with each other on a one-to-one basis, one-to-many basis, or many-to-one basis. For example, one display rack 250 may be an image capturing target with one camera 210 or each of a plurality of display racks 250 may be an image capturing target with one camera 210.

For example, for the camera 210, a camera having a variable image capturing direction and/or angle of view, such as a PTZ (Pan Tilt Zoom) camera may be used. As a result, the PTZ camera 210 can include each of a plurality of different display racks 250 as an image capturing target with one PTZ camera 210. Alternatively, the PTZ camera 210 can include different areas or spaces of one display rack 250 as the image capturing target with one PTZ camera 210.

For example, when it is difficult for one camera 210 to capture the width direction or height direction of one display rack 250 in a camera video, the camera 210 can capture a plurality of areas or spaces having different width directions or height directions in the camera video by variably controlling the image capturing direction of one or more PTZ cameras 210.

In this way, by using the PTZ camera for the camera 210, it is not necessary to install the cameras 210 for each display rack 250 or each different area or space of the display rack 250, so that the number of cameras 210 installed in the inventory management system 201 can be reduced.

The computer 220 illustrated in FIG. 24 is an example of an information processing device and may be a personal computer (PC) or a server. The server may include a cloud server. The computer 220 and the camera 210 are connected, for example, by wire or wirelessly and communicate with each other. Further, the computer 220 and the camera 210 may be connected to each other via a network.

Note that the "network" may be a wired network or a wireless network. Examples of wired networks include intranets, the Internet, and wired LANs (Local Area Networks). An example of a wireless network includes a wireless LAN.

The computer 220 receives, for example, video data captured by the camera 210 (hereinafter, may be abbreviated as a "camera video") and analyzes the received camera video. For example, the computer 220 monitors the inventory of commodities on the display rack 250 by video recognizing the camera video of the display rack 250 and detects an insufficiency or shortage of commodities.

Note that the "video recognition" may be paraphrased as the "image recognition". Further, detecting an insufficiency or a shortage of commodities may be collectively referred to as "shortage detection" for convenience. The "detection" may be paraphrased as "detecting". Further, the receiver of the camera video may be the camera 210 or may be, for example, a recording device that records video data captured by the camera 210.

Monitoring the inventory of commodities may include detecting the location of a rack label attached to the display rack 250. Information related to the commodity (hereinafter referred to as "commodity information") such as a commodity name and/or price may be shown on the rack label. The rack label may be a paper rack label or an electronic rack label. The electronic rack label may be configured with a liquid crystal display or the like or may be configured with an electronic paper or the like. Further, the electronic rack label may be provided with a wireless communication function or the like, and the information to be presented may be rewritten remotely. Note that the "rack label" may be referred to by another name such as a rack tag, a rack card, or the like.

The computer 220 may detect the location of the rack label attached to the display rack 250 by, for example, the video recognition of the camera video, and may set a target area or space for monitoring the inventory on the display rack 250 based on the detected rack label location.

In the following, the target area or space for monitoring the inventory of commodities may be collectively referred to as a "monitoring area" or a "monitoring range". The setting example of the monitoring area on the display rack 250 is performed based on the location of the rack label 251 detected by the video recognition, and the details will be described later.

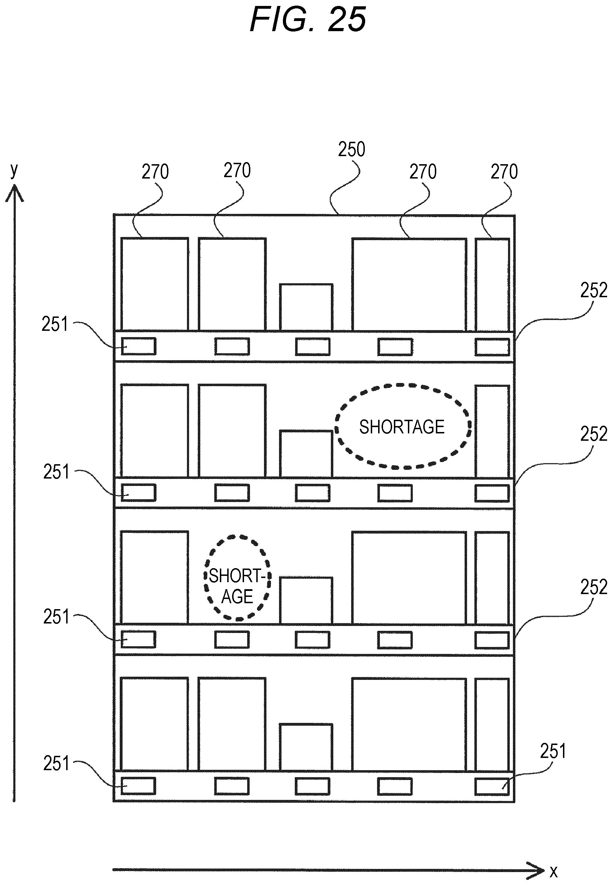

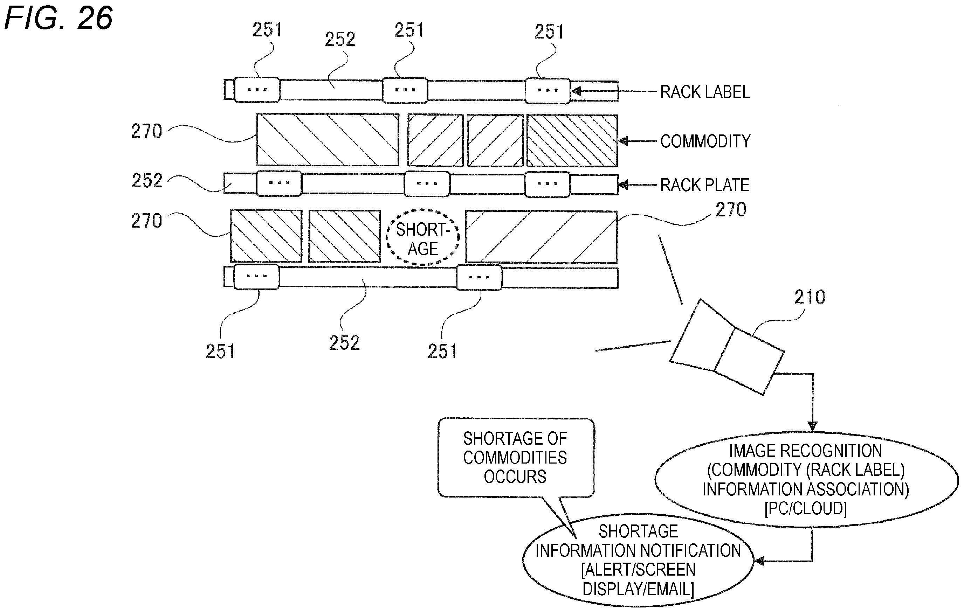

FIG. 25 is a schematic front view of a display rack 250 in which a rack label 251 is attached. FIG. 26 is a front view of the display rack 250 illustrated in FIG. 25. FIG. 26 illustrates a partially enlarged front view of the display rack 250 illustrated in FIG. 25. As a non-limiting example, a display space of the display rack 250 illustrated in FIGS. 25 and 26 is partitioned into four spaces in the height direction of the display rack 250 by three rack plates 252. Further, in FIGS. 25 and 26, the area surrounded by the dotted line frame represents the status where the shortage of the commodities 270 has occurred.

Further, when the computer 220 recognizes video data obtained by the image capturing of the display rack 250 with the camera 210 and detects an insufficiency or a shortage of commodities in the monitoring area set based on the location of the detected rack label 251, an example of outputting the information thereof is described in FIG. 26.

The display space partitioned in the height direction on the display rack 250 may be referred to as a "rack tier". FIG. 25 illustrates an example focusing on two rack tiers. Note that the method of partitioning the display space in one display rack 250 is not limited to the example illustrated in FIG. 25, for example, the display rack 250 is not limited to the height direction of the display rack 250, and the display space may be partitioned in the width direction of the display rack 250.

The rack label 251 may be attached to any location of the display rack 250 so that the correspondence with the displayed commodity 270 can be visually recognized. For example, the rack label 251 may be attached to the rack plate 252. The commodity 270 is displayed, for example, in the area or space corresponding to the location of the corresponding rack label 251 (in the example of FIGS. 25 and 26, the upper space of the rack label 251) in each of the display spaces.

In addition to the detected location information of the rack label 251, information related to the rack allocation (hereinafter referred to as "rack allocation information") may be used for setting the monitoring area and/or monitoring the inventory. The "rack allocation" represents, for example, planning what kind of commodities and how many are displayed (or allocated) in which display space of the display rack 250.

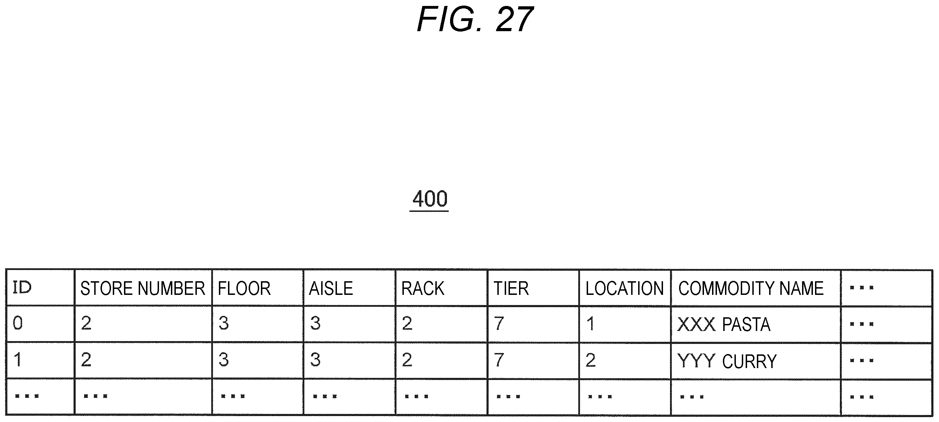

FIG. 27 is a diagram illustrating an example of rack allocation information 400. As illustrated in FIG. 27, the rack allocation information 400 may include, for example, information indicating a location where the commodity 270 is displayed and information related to the commodity 270 displayed at the location. Note that in the following, the information indicating the location where the commodity 270 is displayed may be referred to as "display location information", and information related to the commodity 270 may be referred to as "commodity information".

As a non-limiting example, the display location information may include information indicating any one or more of a store number, the number of floors, an aisle number, a rack number, a rack tier number, and a display location on the rack tier.

The commodity information may include information that can specify or identify individual commodities 270, such as, for example, the type or content of the commodity 270. The non-limiting examples of the information that can specify or identify the commodity 270 include a commodity name such as "XXX pasta" or "YYY curry", or a commodity code.

Note that the commodity information may include, for example, information indicating the size (at least one of the width, height, and depth) of the commodity 270, or information indicating the number of commodities 270 to be displayed, in other words, information indicating the number of displays. Further, the commodity information may include information indicating the price of the commodity 270.

The "number of displays" may indicate, for example, the number of commodities 270 displayed in one or more of the width direction, the height direction, and the depth direction of the rack tier. Based on one or both of the information indicating the size of the commodity 270 and the information indicating the number of commodities 270 displayed, for example, it is possible to improve the accuracy of specifying the space or area occupied by the plurality of commodities 270 on the rack tier.

Therefore, the computer 220 can improve the setting accuracy of the monitoring area based on the rack label location by referring to the rack allocation information 400, and as a result, can improve the shortage detection accuracy of the commodity 270.

Further, based on the rack allocation information 400, the computer 220 may correct the detection result (for example, the rack label location) of the rack label 251 attached to the display rack 250 based on the video recognition. Correcting the rack label location may include, for example, correcting the omission in the detection of the rack label 251 by the video recognition based on the rack allocation information 400. An example of setting the monitoring area and an example of correcting the rack label location using the rack allocation information 400 will be described later.

### [Computer 220 Configuration Example]

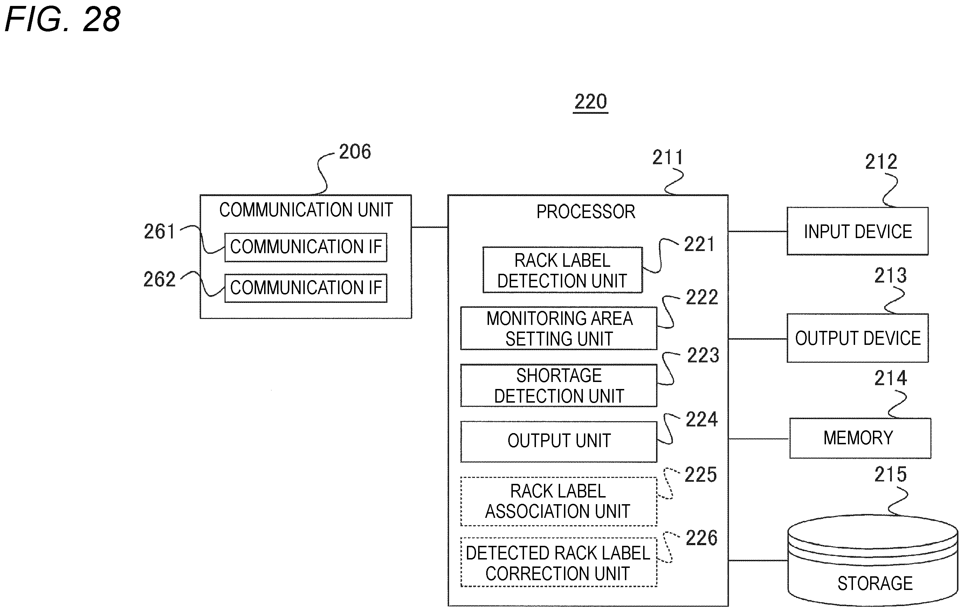

Next, a configuration example of the computer 220 will be described with reference to FIG. 28. FIG. 28 is a diagram illustrating a configuration example of the computer 220. As illustrated in FIG. 28, the computer 220 may include, for example, a processor 201, an input device 202, an output device 203, a memory 204, a storage 205, and a communication unit 206.

The processor 211 controls an operation of the computer 220. The processor 211 is an example of a circuit or device having computing power. For the processor 211, for example, at least one of a CPU (Central Processing Unit), an MPU (Micro Processing Unit), and a GPU (Graphics Processing Unit) may be used.

The input device 212 may include, for example, at least one of a keyboard, a mouse, an operation button, and a microphone. Data or information may be input to the processor 211 through the input device 212.

The output device 213 may include, for example, at least one of a display (or monitor), a printer, and a speaker. The display may be, for example, a touch panel type display. The touch panel type display may be regarded as corresponding to both the input device 212 and the output device 213.

The memory 213 stores, for example, a program executed by the processor 211 and data or information processed according to the execution of the program. The memory 213 may include a RAM (Random Access Memory) and a ROM (Read Only Memory). The RAM may be used as the work memory of the processor 211. The "program" may be referred to as "software" or an "application".

The storage 215 stores a program executed by the processor 211 and data or information processed according to the execution of the program. The rack allocation information 400 described above may be stored in the storage 215. Note that the rack allocation information 400 may be stored in the storage 215 in advance, or may be provided from the rack allocation system (not illustrated) that manages the rack allocation information 400 and stored in the storage 215, for example.

The storage 215 may include a semiconductor drive device such as a hard disk drive (HDD) or a solid state drive (SSD). A non-volatile memory, such as a flash memory, may be included in the storage 215 in addition or as an alternative to the semiconductor drive device.

The program may include an inventory monitoring program that monitors the inventory of the commodity 170 by the video recognition as described above. All or a part of the program codes that makes up the inventory monitoring program may be stored in the memory 214 and/or the storage 215 or may be incorporated as a part of an operating system (OS).

The program and/or data may be provided in a form recorded on a recording medium which is readable by the computer 220. Examples of recording media include a flexible disc, a CD-ROM, a CD-R, a CD-RW, an MO, a DVD, a Blu-ray disc, a portable hard disk, and the like. Further, a semiconductor memory such as a USB (Universal Serial Bus) memory is also an example of a recording medium.

Further, the program and/or data may be provided (downloaded) to the computer 220 from a server (not illustrated) via a communication line, for example. For example, the program and/or data may be provided to the computer 220 through the communication unit 206 and stored in the memory 214 and/or the storage 215. Further, the program and/or data may be provided to the computer 220 through the input device 212 and stored in the memory 214 and/or the storage 215.

The communication unit 206 includes, for example, a communication interface (IF) 261 for communicating with the camera 210. The communication IF 261 may be either a wired interface or a wireless interface.

For example, the communication IF 261 receives video data captured by the camera 210. The received video data is stored in the memory 214 and/or the storage 215 via, for example, the processor 211. When the camera 210 is a PTZ camera, the communication unit 206 may control the image capturing direction and/or the angle of view of the PTZ camera 220 by communicating with the PTZ camera 220 in response to an instruction from the processor 211, for example.

Further, the communication unit 216 may include a communication IF 262 for communicating with an "other computer" (not illustrated) different from the computer 220. The "other computer" may be, for example, a server connected to a wired or wireless network, or a user terminal connected to a wired or wireless network. The "other computer" may correspond to the computer in the rack allocation described above.

The user terminal may be possessed by, for example, the inventory manager of the commodity 270. Non-limiting examples of the user terminal include a PC, a mobile phone (including a smartphone), and a tablet terminal. Information related to the inventory management or the inventory monitoring of the commodity may be provided to the user terminal.

The processor 211 can make the computer 220 function as an inventory monitoring device that monitors the inventory of the commodity 270 by the video recognition, for example, by reading and executing the inventory monitoring program stored in the memory 214 and/or the storage 215.

For example, by having the processor 211 execute the inventory monitoring program, the inventory monitoring device 220 including a rack label detection unit 221, a monitoring area setting unit 222, a shortage detection unit 223, and an output unit 224, which is illustrated in FIG. 28, is implemented. As an option, in the inventory monitoring device 220, one or both of the rack label association unit 225 and the detected rack label correction unit 226 may be implemented in response to the execution of the inventory monitoring program.

The rack label detection unit 221 detects the rack label 251 included in the camera video by, for example, the video recognition of the camera video including all or a part of the display rack 250. For example, the rack label detection unit 221 may detect the rack label 251 by performing a pattern matching with respect to the camera video using the template image corresponding to a shape and/or color of the rack label 251.

The monitoring area setting unit 222 sets the monitoring area on the display rack 250, for example, based on the location of the rack label 251 detected by the rack label detection unit 221.

The shortage detection unit 223 is an example of a monitoring unit and monitors the inventory of the commodity 270 on the display rack 250 (or may be referred to as "display status") based on the video change corresponding to the presence or absence of a commodity in the monitoring area set by the monitoring area setting unit 222, for example.

For example, the shortage detection unit 223 may detect an inefficiency or a shortage of the commodities 270 by performing the pattern matching with respect to the camera video in the monitoring area by using the background video, which appears in the monitoring area when commodity 270 is insufficient or in a shortage status, as a template image.

Note that the shape of the rack label 251 may change in the camera video depending on the installation location and/or the image capturing direction of the camera 210. For example, the shape of the rack label 251 is different between the camera video of the display rack 250 captured from the front and the camera video of the display rack 250 captured from the oblique direction which is deviated from the front.

Further, the background video that appears in the camera video when the commodity 270 is insufficient or in the shortage status may change depending on the installation location and/or the image capturing direction of the camera 210 (hereinafter, may be collectively referred to as "camera location" for convenience).

For example, in a camera video of the display rack 250 captured from the front, an image of a back plate located on the back side of the display rack 250 in the front direction may correspond to a background video. Further, in the camera video obtained by capturing an image of the display rack 250 from the obliquely upper part, for example, the side of the rack plate 252 on which the commodity 270 is displayed may correspond to the background video. In the camera video obtained by capturing an image of the display rack 250 from the obliquely side part, for example, the surface of a partition plate (not illustrated) that partitions the rack tiers in the horizontal direction can correspond to the background video.

In this way, since the shape and/or the background video of the rack label 251 changes depending on the camera location, a template image (which may be rephrased as a "recognition model") used for the pattern matching of video recognition may be prepared according to the camera location. Note that in Embodiment 2, the recognition model is a template image, and although it is described as recognizing the shape and/or the background video of the rack label by the pattern matching, other implementation methods are also possible. For example, the rack label and/or the background video may be recognized by using the learned model generated by performing the machine learning for each of the rack labels and/or the background video as a recognition model.

For example, when the cameras 210 are installed at a plurality of places and/or when the image capturing direction is variable as in the PTZ camera 210, a plurality of template images may be prepared. The template image is stored in the storage 215, for example and is read out in a timely manner by the processor 211.

The output unit 224 is an example of a notification information generation unit that generates and outputs information to be presented (for example, notified) to the inventory manager, for example. The output unit 224 generates, for example, a detection result by the shortage detection unit 223 and/or notification information including information based on the detection result, and outputs the detection result and the notification information to the output device 213 and/or the communication unit 216.

As a non-limiting example, the information for notifying the inventory manager of the shortage detection of the commodity 270 (which may be referred to as "notification information", "shortage information", or "alert information") may be output to a display and/or a printer, which is an example of the output device 213.

Note that the output unit 224 may generate the notification information based on the information associated with one or both of the detection result by the shortage detection unit 223 and the detection result by the rack label detection unit 221 and rack allocation information 400.

For example, based on the information associated with the detection result by the shortage detection unit 223 and the rack allocation information 400, the output unit 224 can generate the notification information that includes the place (shortage area) related to the shortage detection of the commodity 270 and/or the commodity name of the shortage detected commodity 270.

Note that the notification information may be transmitted to "another computer" via, for example, the communication unit 216. An e-mail may be used to transmit the notification information via the communication unit 216.

The rack label association unit 225 associates the rack allocation information 400 (for example, commodity information) with each of the rack labels 251 detected by the rack label detection unit 221.

For example, when the rack allocation information 400 includes information related to the size and the number of displays of the commodity 270 as an example of the commodity information, the detected rack label correction unit 226 may correct the rack label location detected by the rack label detection unit 221 based on the commodity information.

Note that the configuration of the computer (inventory monitoring device) 220 illustrated in FIG. 28 is merely an example. Hardware and/or functional blocks may be increased or decreased as appropriate in the inventory monitoring device 220. For example, the addition, deletion, division, or integration of the hardware and/or the functional blocks may be appropriately performed in the inventory monitoring device 220.

### [Operation Example]

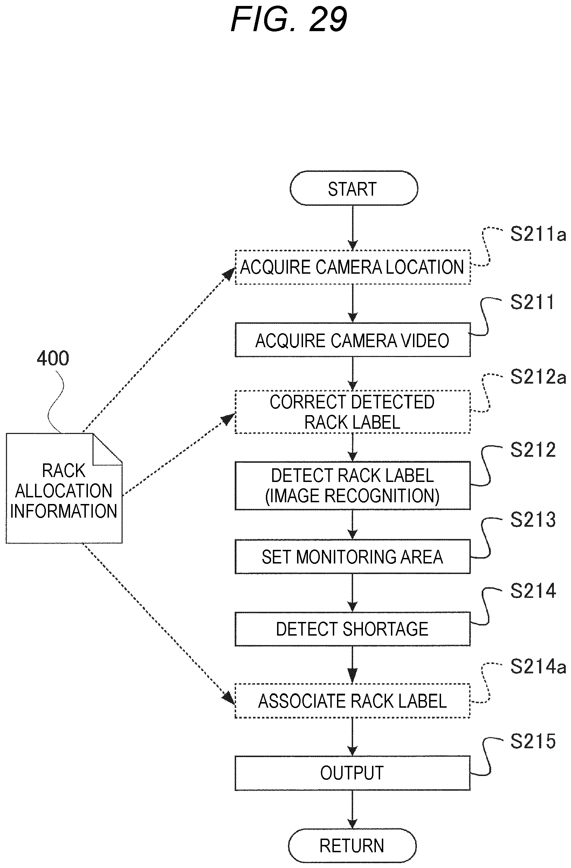

Next, an operation example of the inventory monitoring device 220 will be described with reference to FIG. 29. FIG. 29 is a flowchart illustrating an example of an operation procedure of the inventory monitoring device 220 according to Embodiment 2.

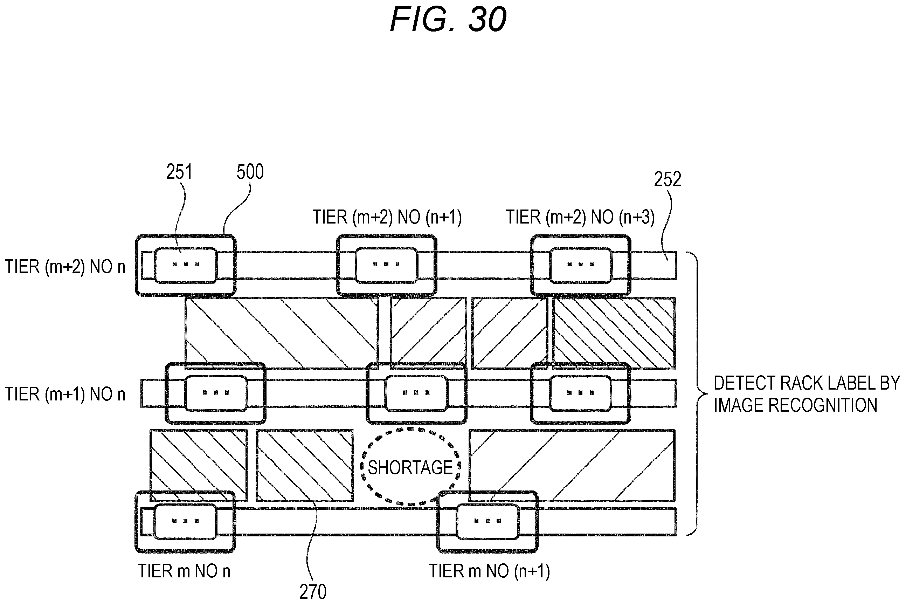

As illustrated in FIG. 29, the inventory monitoring device 220 acquires, for example, a camera video (S211), and detects the rack label 251 included in the camera video by analyzing the acquired camera video, for example, by the rack label detection unit 221 (S212a). For example, as illustrated with a thick frame 500 in FIG. 30, eight rack labels 251 are detected by the video recognition.

In the example of FIG. 30, two rack labels 251 are detected on the rack plate 252 of m-th tier from the bottom, and three rack labels 251 are detected in each of the rack plate 252 located on the upper tier ((m + 1)-th tier from the bottom) and the rack plate 252 located on the further upper tier ((m + 2)-th tier from the bottom). Note that m is an integer of one or more.

The locations of the two rack labels 251 detected on the rack plate 252 of m-th tier from the bottom are, for example, the n-th and (n + 1)-th locations (n is an integer of one or more) in order from the left. Similarly, the locations of the three rack labels 251 detected on the rack plate 252 of (m+1)-th tier from the bottom are, for example, n-th, (n + 1)-th, and (n+2)-th locations in order from the left. The locations of the three rack labels 251 detected on the rack plate 252 of (m+2)-th tier from the bottom are, for example, n-th, (n + 1)-th, and (n+2)-th locations in order from the left. Note that the "m-th tier and n-th" location may be represented as the "tier m no n" or "tier m row n" location.

When the inventory management system 201 is provided with a plurality of cameras 210 or when a PTZ camera is used for the camera 210, the inventory monitoring device 220 may acquire information indicating the camera location and sends the information to the rack label detection unit 221 (S211a in FIG. 29).

The information indicating the camera location may be associated with, for example, the rack allocation information 400 in advance. The rack label detection unit 221 may set the recognition model suitable for detecting the rack label 251 by the video recognition by identifying which camera 210 and which image capturing direction the camera video is in based on the information indicating the camera location and the rack allocation information 400, for example. Note that an example of associating the information indicating the camera location with the rack allocation information 400 will be described later.

In response to the detection of the rack label 251 (S212 in FIG. 29), the inventory monitoring device 220 sets the monitoring area for monitoring the inventory of the commodity 270 by, for example, the monitoring area setting unit 222 (S213 in FIG. 29). For example, the monitoring area setting unit 222 sets one of the detected rack labels 251 as the reference rack label 251. As a non-limiting example, FIG. 30 illustrates an aspect in which the lower left (tier 1 no 1) rack label 251 is set as a reference rack label 251.

The reference rack label 251 may be autonomously set by the inventory monitoring device 220 (for example, the monitoring area setting unit 222), or may be designated (manually designated) by the user (for example, the inventory manager) of the inventory monitoring device 220.

For example, by making the external appearance such as the color (for example, frame color) and/or the shape of the reference rack label 251 different from the external appearance of the other rack label 251, the reference rack label 251 can be set autonomously by the video recognition.

Alternatively, information such as the rack label 251 of the "tier ○ no Δ" may be input to the monitoring area setting unit 222 through the input device 212 as the information for designating the reference rack label 251. Further, the manual designation may be used to complement the autonomous setting.

Depending on the setting of the reference rack label 251, the monitoring area setting unit 222 may detect the rack labels 251 which is adjacent to the reference rack label 251 in the vertical direction and/or the horizontal direction based on the rack allocation information 400 (for example, display location information) illustrated in FIG. 27, for example.

Note that the rack labels 251 adjacent to each other in the vertical direction and/or the horizontal direction may be referred to as "adjacent rack label 251" for convenience. The "detection" of the adjacent rack label 251 may be paraphrased as the "search" or "explore" of the adjacent rack label 251.

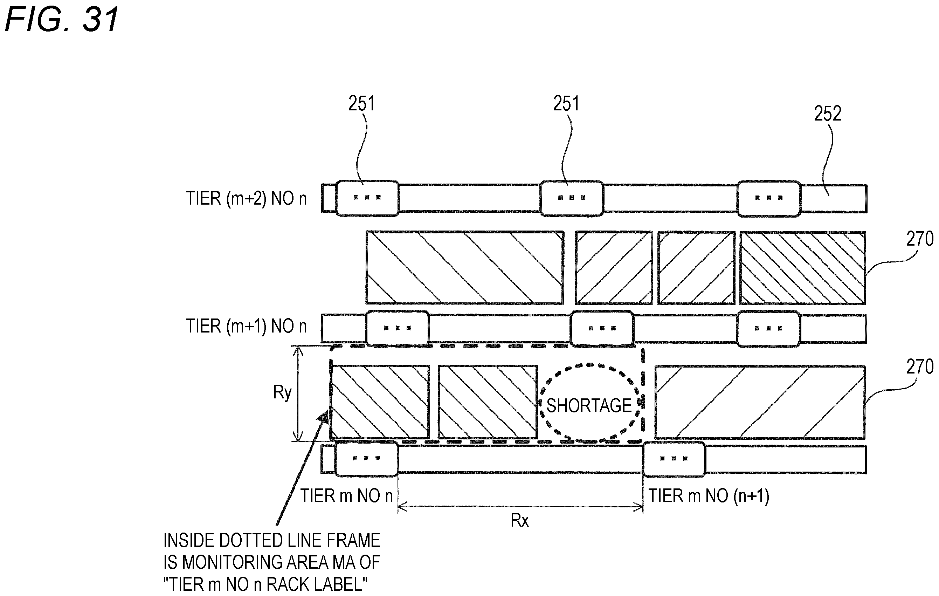

The monitoring area setting unit 222 may set the monitoring area based on the detected distance between the rack labels 251. FIG. 31 illustrates an example of setting the monitoring area.

FIG. 31 is a diagram illustrating an example of setting a monitoring area. In FIG. 31, for example, when the rack label 251 of tier m (= 1) no n (= 1) is set as the reference rack label, the monitoring area setting unit 223 obtains the distance between the reference rack label 251 and the adjacent rack label 251.

For example, the distance Rx between the reference rack label 251 of tier m no n and the rack label 251 of tier m no (n + 1) in the right direction is detected, and the distance Ry between the reference rack label 251 and the rack label 251 of tier (m+1) no n in the upper direction is detected.

The monitoring area setting unit 222 sets, for example, the monitoring area MA (see the dotted line frame) having a size and shape determined by the distances Rx and Rx as the monitoring area for the rack label 251 of tier 1 no 1. For the other rack labels 251, the monitoring area setting unit 222 also sets the monitoring area MA for each of the rack labels 251 detected by the video recognition by detecting the distances Rx and Ry between the other rack label 251 and the adjacent rack label 251.

Note that the shape of the monitoring area MA may be a rectangle or a circle such as an ellipse. Further, since the monitoring area MA is set based on the distance between the rack labels 251, it is preferable that the rack label 251 is installed according to a certain rule (for example, a rule that the rack label 251 is installed at the lower left of the commodity 270). When a certain rule is set, it is possible to set an accurate monitoring area MA based on the location of each rack label 251 and the rule. For example, when the rack label 251 is disposed at the lower left of the commodity 270, it can be seen that the monitoring area exists on the right side of the rack label 251.

Further, when a rack tier, on which the rack label 251 is not installed, exists (for example, the uppermost rack tier), by installing the dummy rack label 251, the distance between the rack labels 251 including the dummy rack label 251 may be obtained. Note that when the distance Ry above the uppermost rack tier is obtained by using the dummy rack label 251, for example, the dummy rack tier 251 may be installed in the POP which is installed on the rack. Alternatively, regarding the distance Ry in the rack tier where the rack label 251 is not installed, the distance between the rack labels 251 may be obtained based on the distance from another rack tier (for example, the rack tier of the lower tier). Specifically, the Ry of the rack tier immediately below with less distortion of the perspective may be reused, or the Ry of another rack tier may be converted based on the parameters of the camera to estimate the Ry. Alternatively, regarding the rack tier on which the rack label 251 is not installed, the distance between the rack labels 251 may be set manually.

Further, regarding the rack label 251 located at the right end of the rack tier, when another adjacent display rack 250 exists, the distance between the rack labels 251 may be obtained as the distance between the rack labels 251 attached to the display rack 250 thereof. Alternatively, regarding the rack label 251 located at the right end of the rack tier, the distance from the image end of the camera video may be set as the distance between the rack labels 251.

Note that the rack allocation information 400 may include, for example, information related to one or more of the width, height, depth, and the number of displays of the commodity 270 to be monitored. In this case, based on the information, the detected rack label correction unit 226 may correct the rack label location detected by the rack label detection unit 221.

In other words, the rack allocation information 400 may be used for checking the accuracy and/or correcting of the detection result of the rack label 251 by the video recognition. By correcting the rack label location of the rack label 251, it is possible to improve the accuracy of the shortage detection of the commodity 270 to be monitored.

After setting the monitoring area MA the inventory monitoring device 220 causes the shortage detection unit 223 to detect an area where the commodity 270 is insufficient or in the shortage status in the monitoring area MA by performing the pattern matching between the camera video and the background video of individual monitoring areas MA, for example (S214 in FIG. 29).

For example, in FIG. 31, only two commodities 270 are displayed in a space where three commodities 270 can be displayed on the rack label 251 of tier m no n row. Therefore, in the camera video of the monitoring area MA, a background video corresponding to one commodity 270 appears.

Further, as illustrated in FIG. 29, the inventory monitoring device 220 associates, for example, an area where the commodity 270, which is detected in the monitoring area MA, is insufficient or in the shortage status with the rack allocation information 400 related to the area or the commodity 270 (S214a).

The shortage detection unit 223 detects that the commodity 270 is not displayed in the area where the background video appears by the fact that the background video and the template image appearing in the monitoring area MA match in the pattern matching. In other words, the insufficiency or the shortage of the commodities 270 corresponding to the rack label 251 is detected.

In response to the detection of the insufficiency or the shortage of the commodities 270, the inventory monitoring device 220 generates and outputs information notifying the inventory manager of the shortage detection of the commodity 270 by, for example, the output unit 224 (S215 in FIG. 29). The information for notifying the inventory manager of the shortage detection of the commodity 270 may include text information and/or voice information, and for example, in a display on which the camera video is displayed, information for highlighting the area related to the shortage detection may be included.

Examples of non-limiting aspects of highlighting include the following. The following highlighting aspects may be combined as appropriate.
- In the camera video, change the color of the area related to the shortage detection (hereinafter, may be collectively referred to as the "shortage area" for convenience) to a color (emphasized color) that stands out more than the color of the other areas.
- Display the shortage area blinking.
- Display the shortage area with a solid line frame or a dotted line frame. The solid line frame or the dotted line frame may be colored (emphasized color).
- Display the solid line frame or the dotted line frame attached to the shortage area blinking.

As described above, according to the inventory monitoring device 220 described above, since the monitoring area is set for the display rack 250 in the camera video based on the location of the rack label 251 detected by the video recognition of the camera video including the display rack 250, for example, the monitoring area can be appropriately set with respect to the camera video including the display rack 250 without manual operation. Note that in a case where the reference rack label is designated, manual operations cannot be completely eliminated when setting the monitoring area, but most of the monitoring area settings can be automated, and since the reference rack label can be set accurately, it is possible to set the monitoring area more accurately and quickly than in the past.

In other words, the setting of the display space to be monitored on the display rack 250 can be automated. Therefore, for example, even when the relative locational relationship between the display rack 250 and the camera 210 fluctuates due to external factors such as vibration, it is possible to appropriately reset the monitoring area by detecting the rack label 251 by the video recognition.

Further, the inventory monitoring device 220 monitors the inventory of the commodity 270 on the display rack 250 based on the video change corresponding to the presence or absence of the commodity 270 in the set monitoring area, and since the inventory monitoring device 220 notifies, for example, the inventory manager of the monitoring result, it is possible to suppress the case where a specific commodity is left in a shortage state. Therefore, it is possible to suppress the loss of commodity sales opportunities and enhance the image with respect to customers.

Note that the present application is based on a Japanese patent application filed on June 7, 2018 (Japanese Patent Application No. 2018-109251), the contents of which are incorporated herein by reference.

### INDUSTRIAL APPLICABILITY

The present disclosure is useful as a demand prediction device and a demand prediction method that predict the number of delivery vehicles required for home delivery such as private homes and support the realization of an efficient delivery plan.

### REFERENCE SIGNS LIST

5 demand prediction device
10 processor
11 information acquisition unit
12 package quantity learning unit
13 package quantity prediction unit
14 first truck number prediction unit
15 heat map generation unit
16 heat map learning unit
17 heat map prediction unit
18 minimum truck number determination unit
19 minimum truck number learning unit
20 second truck number prediction unit
21 truck number determination unit
31 external information storage unit
32 delivery record storage unit
33 package quantity learning model storage unit
34 heat map learning model storage unit
35 minimum truck number learning model storage unit 60 output unit
70 communication unit
80 server
NW network

## Claims

1. A demand prediction device comprising:
an input variable acquisition unit that acquires an input variable including delivery date and time;
a heat map prediction unit that predicts a heat map corresponding to the input variable by using a heat map prediction model for predicting a heat map which indicates, for each segment, the number of distributions of delivery destinations distributed in at least one of a plurality of segments constituting a delivery target area;
a minimum delivery vehicle number prediction unit that predicts the minimum number of delivery vehicles corresponding to the predicted heat map by using a minimum delivery vehicle number prediction model for predicting the minimum number of the delivery vehicles for delivering a package to the delivery destination; and
a delivery vehicle number determination unit that determines the predicted minimum number of the delivery vehicles as the number of delivery vehicles to be used at the delivery date and time included in the input variable.

2. The demand prediction device according to claim 1, further comprising:
a delivery record acquisition unit that acquires delivery record information of the past including delivery date and time and location information of each of a plurality of delivery destinations;
a heat map generation unit that determines a segment in which each of the plurality of delivery destinations is distributed by using the location information of each of the plurality of delivery destinations and generates the heat map corresponding to each of the plurality of delivery destinations for each delivery record information of the past; and
a heat map learning unit that generates the heat map prediction model based on learning a relationship between the delivery record information and the heat map generated for each delivery record information.

3. The demand prediction device according to claim 1, further comprising:
a delivery record acquisition unit that acquires delivery record information of the past including delivery date and time and location information of each of a plurality of delivery destinations;
a minimum delivery vehicle number determination unit that determines the minimum number of delivery vehicles for delivering a package to each of the plurality of delivery destinations by using the location information of each of the plurality of delivery destinations; and
a minimum delivery vehicle number learning unit that generates the minimum delivery vehicle number prediction model based on learning a relationship between the delivery record information and the minimum number of the delivery vehicles determined in accordance with the delivery record information.

4. The demand prediction device according to claim 1, further comprising:
a delivery record acquisition unit that acquires delivery record information of the past including delivery date and time and a package quantity delivered; and
a package quantity learning unit that generates a package quantity prediction model for predicting a package quantity to be delivered, based on learning a relationship between the delivery date and time, and the package quantity delivered.

5. The demand prediction device according to claim 4, further comprising:
a package quantity prediction unit that predicts a package quantity corresponding to the input variable by using the package quantity prediction model.

6. The demand prediction device according to claim 5, further comprising:
a delivery vehicle number prediction unit that predicts the number of delivery vehicles that deliver packages of the predicted package quantity based on the predicted package quantity and a load capacity of the delivery vehicle, wherein
the delivery vehicle number determination unit determines the larger value of a predicted value of the number of the delivery vehicles obtained based on the predicted package quantity and a predicted value of the number of the delivery vehicles obtained based on the predicted heat map, as the number of the delivery vehicles to be used at the delivery date and time included in the input variable.

7. The demand prediction device according to claim 1, wherein
the delivery vehicle number determination unit outputs information related to the determined number of the delivery vehicles to be used to an output unit.

8. The demand prediction device according to claim 1, wherein
the input variable includes information about the delivery date and time, a day of the week, a weather forecast, and an event.

9. A demand prediction method in a demand prediction device, the demand prediction method comprising:
a step of acquiring an input variable including delivery date and time;
a step of predicting a heat map corresponding to the input variable by using a heat map prediction model for predicting a heat map which indicates, for each segment, the number of distributions of delivery destinations distributed in at least one of a plurality of segments constituting a delivery target area;
a step of predicting the minimum number of delivery vehicles corresponding to the predicted heat map by using a minimum delivery vehicle number prediction model for predicting the minimum number of the delivery vehicles for delivering a package to the delivery destination; and
a step of determining the predicted minimum number of the delivery vehicles as the number of delivery vehicles to be used at the delivery date and time included in the input variable.
